(19) Europäisches Patentamt
European Patent Office
Office européen des brevets

(11) **EP 4 383 862 A1**

(12) **EUROPEAN PATENT APPLICATION**
published in accordance with Art. 153(4) EPC

(43) Date of publication:
**12.06.2024 Bulletin 2024/24**

(21) Application number: **22852054.0**

(22) Date of filing: **29.07.2022**

(51) International Patent Classification (IPC):
*H04W 64/00* (2009.01)    *H04W 24/08* (2009.01)

(52) Cooperative Patent Classification (CPC):
**H04W 24/08; H04W 64/00**

(86) International application number:
**PCT/CN2022/108929**

(87) International publication number:
**WO 2023/011341 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 CN 202110901667**

(71) Applicant: **Datang Mobile Communications Equipment Co., Ltd.**
**Beijing 100085 (CN)**

(72) Inventors:
• **REN, Bin**
**Beijing 100085 (CN)**
• **FANG, Rongyi**
**Beijing 100085 (CN)**
• **DA, Ren**
**Beijing 100085 (CN)**
• **REN, Xiaotao**
**Beijing 100085 (CN)**
• **ZHANG, Zhenyu**
**Beijing 100085 (CN)**

(74) Representative: **Maiwald GmbH**
**Engineering**
**Elisenhof**
**Elisenstrasse 3**
**80335 München (DE)**

(54) **ERROR MEASUREMENT AND COMPENSATION METHODS, AND APPARATUS**

(57) Embodiments of the present disclosure provide an error measurement method and an error compensation method, and apparatuses. The error measurement method includes: measuring, by a base station, sounding reference signals (SRSs) transmitted by a terminal to obtain relative time of arrival (RTOA) measurement values corresponding to different timing error groups (TEGs); and transmitting, by the base station, the RTOA measurement values or a difference between the RTOA measurement values corresponding to different TEGs to a location management function (LMF).

FIG. 3

**Description**

**CROSS-REFERENCE TO RELATED APPLICATION**

This application claims a priority to Chinese Patent Application No. 202110901667.9 filed in China on August 6, 2021, the disclosure of which is incorporated by reference herein in its entirety.

**TECHNICAL FIELD**

The present disclosure relates to the field of communications technology, in particular to an error measurement method and an error compensation method, and apparatuses.

**BACKGROUND**

In positioning of wireless communications, a timing error of transmitting a positioning reference signal and a timing error of receiving a positioning reference signal directly affect the accuracy of time measurement value and the accuracy of positioning calculation. A transmitter may be configured with multiple radio frequency (Radio Frequency, RF) transmission chains (RF Tx chain). The transmitter may use different RF Tx chains to transmit positioning reference signals. Multiple RF Tx chains may have the same or different transmission delay errors. A receiver may be configured with multiple RF reception chains (RF Rx Chain). The receiver may use different RF Rx chains to receive positioning reference signals. Multiple RF Rx chains may have the same or different transmission time delay errors.

In the related technologies, time of arrival (Time of Arrival, TOA) of a wireless positioning signal to a receiver is measured to obtain a propagation delay of the wireless positioning signal from a transmitter to the receiver. The accuracy of the TOA measurement is affected by the timing error of transmission and reception. In order to improve the positioning accuracy, the definition of timing error group (Timing Error Group, TEG) is introduced. However, TEG has time-varying characteristics. For example, in the uplink double-difference positioning solution, due to angles and other reasons, a receiver may use different TEGs for receiving, or a transmitter may use different TEGs for transmitting, which results in residual errors caused by different TEGs after performing double-difference, leading to inaccurate positioning.

**SUMMARY**

The present disclosure is to provide an error measurement method and an error compensation method, and apparatuses, so to as solve the problem of inaccurate positioning of a positioning method in related technologies.

An embodiment of the present disclosure provides an error measurement method, including:

measuring, by a base station, sounding reference signals (Sounding Reference Signal, SRSs) transmitted by a terminal to obtain relative time of arrival (Relative Time of Arrival, RTOA) measurement values corresponding to different timing error groups (TEGs); and
transmitting, by the base station, the RTOA measurement values or a difference between the RTOA measurement values corresponding to different TEGs to a location management function (Location Management Function, LMF).

Optionally, the measuring the SRSs transmitted by the terminal to obtain the RTOA measurement values corresponding to different TEGs includes:

receiving, through different transmission-reception point (Transmit Receive Point, TRP) reception timing error groups (TRP Rx TEGs), same SRSs transmitted by the terminal, and measuring the SRSs to obtain RTOA measurement values respectively corresponding to different TRP Rx TEGs; and/or,
receiving, through a same TRP Rx TEG, SRSs corresponding to different user equipment (User Terminal, UE) transmission timing error groups (UE Tx TEGs) transmitted by the terminal, and measuring the different SRSs respectively to obtain RTOA measurement values respectively corresponding to different UE Tx TEGs.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the method further includes: determining whether a measurement time of the RTOA measurement value satisfies an effective time condition based on TEG effective time information; wherein the transmitting the RTOA measurement values or the difference between the RTOA measurement values corresponding to different TEGs to the LMF includes: transmitting the RTOA measurement values or the difference between the RTOA measurement values corresponding to different TEGs to the LMF, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (Timing Error, TE); or
a variance of uncertainty of a TE; or
an amount of change in a TEG; or
indication information for a change situation of a TEG association relationship.

Optionally, after obtaining the RTOA measurement values corresponding to different TEGs, the method further includes: obtaining an average value of RTOA measurement values corresponding to K measurement times, or obtaining an average value of difference values of RTOA measurement values corresponding to K measurement times, where K is greater than or equal to 2, and the K measurement times satisfy the effective time condition.

An embodiment of the present disclosure provides an error compensation method, including:

obtaining, by a LMF, RTOA measurement values corresponding to different TEGs or a difference between the RTOA measurement values corresponding to different TEGs; and
performing, by the LMF, error compensation according to the RTOA measurement values or the difference between the RTOA measurement values.

Optionally, the RTOA measurement values include:

RTOA measurement values obtained by that the base station receives, through different TRP Rx TEGs, same SRSs transmitted by the terminal, and measures the SRSs; and/or,
RTOA measurement values obtained by that the base station receives, through a same TRP Rx TEG, SRSs corresponding to different UE Tx TEGs transmitted by the terminal, and measures the different SRSs respectively.

Optionally, the performing error compensation according to the RTOA measurement values includes:

obtaining a difference between the RTOA measurement values corresponding to different TEGs according to the RTOA measurement values; and
performing error compensation based on the difference between the RTOA measurement values.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the performing error compensation based on the difference between the RTOA measurement values includes:

determining whether a measurement time of the RTOA measurement values satisfies an effective time condition based on TEG effective time information; and
performing error compensation based on the difference between the RTOA measurement values, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or

a validity period of a TEG ID; or
a mean value of a change rate of a timing error (TE); or
a variance of uncertainty of a TE; or
an amount of change in a TEG; or
indication information for a change situation of a TEG association relationship.

Optionally, the RTOA measurement value is an average value of RTOA measurement values corresponding to K measurement times; or the difference between the RTOA measurement values is an average value of difference values of RTOA measurement values corresponding to K measurement times, where K is greater than or equal to 2, and the K measurement times satisfy the effective time condition.

Optionally, the performing, by the LMF, error compensation according to the RTOA measurement values or the difference between the RTOA measurement values includes: taking a sum of a positioning measurement result and an error compensation value as a compensated positioning measurement result.

An embodiment of the present disclosure provides an error measurement apparatus, including: a memory, a transceiver and a processor. The memory is configured to store a computer program; the transceiver is configured to transmit and receive data under control of the processor; and the processor is configured to read the computer program from the memory to perform the following operations: measuring sounding reference signals (SRSs) transmitted by a terminal to obtain relative time of arrival (RTOA) measurement values corresponding to different timing error groups (TEGs). The transceiver is configured to transmit the RTOA measurement values or a difference between the RTOA measurement values corresponding to different TEGs to a location management function (LMF).

Optionally, the processor is configured to read computer program from the memory to perform the following operations:

receiving, through different transmission-reception point reception timing error groups (TRP Rx TEGs), same SRSs transmitted by the terminal, and measuring the SRSs to obtain RTOA measurement values respectively corresponding to different TRP Rx TEGs; and/or,
receiving, through a same TRP Rx TEG, SRSs corresponding to different user equipment transmission timing error groups (UE Tx TEGs) transmitted by the terminal, and measuring the different SRSs respectively to obtain RTOA measurement values respectively corresponding to different UE Tx TEGs.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the processor is configured to read computer program from the memory to perform the following operations: determining whether a measurement time of the RTOA measurement values satisfies an effective time condition based on TEG effective time information. The transceiver is configured to transmit the RTOA measurement values or the difference between the RTOA measurement values corresponding to different TEGs to the LMF, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the processor is configured to read computer program from the memory to perform the following operations: obtaining an average value of RTOA measurement values corresponding to K measurement times, or obtaining an average value of difference values of RTOA measurement values corresponding to K measurement times, where K is greater than or equal to 2, and the K measurement times satisfy the effective time condition.

An embodiment of the present disclosure provides an error compensation apparatus, including: a memory, a transceiver and a processor. The memory is configured to store a computer program; the transceiver is configured to transmit and receive data under control of the processor; and the processor is configured to read the computer program from the memory to perform the following operations:

obtaining RTOA measurement values corresponding to different TEGs or a difference between the RTOA measurement values corresponding to different TEGs; and

performing error compensation according to the RTOA measurement values or the difference between the RTOA measurement values.

Optionally, the RTOA measurement values include:

RTOA measurement values obtained by that a base station receives, through different TRP Rx TEGs, same SRSs transmitted by a terminal, and measures the SRSs; and/or,
RTOA measurement values obtained by that a base station receives, through a same TRP Rx TEG, SRSs corresponding to different UE Tx TEGs transmitted by a terminal, and measures the different SRSs respectively.

Optionally, the processor is configured to read the computer program from the memory to perform the following operations:

obtaining a difference between the RTOA measurement values corresponding to different TEGs according to the RTOA measurement values; and
performing error compensation based on the difference between the RTOA measurement values.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the processor is configured to read the computer program from the memory to perform the following operations:

determining whether a measurement time of the RTOA measurement values satisfies an effective time condition based on TEG effective time information; and

performing error compensation based on the difference between the RTOA measurement values, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the RTOA measurement value is an average value of RTOA measurement values corresponding to K measurement times; or the difference between the RTOA measurement values is an average value of difference values of RTOA measurement values corresponding to K measurement times, where K is greater than or equal to 2, and the K measurement times satisfy the effective time condition.
Optionally, the processor is configured to read the computer program from the memory to perform the following operations: taking a sum of a positioning measurement result and an error compensation value as a compensated positioning measurement result.
An embodiment of the present disclosure provides an error measurement apparatus, including:

a first obtaining unit, configured to measure sounding reference signals (SRSs) transmitted by a terminal to obtain relative time of arrival (RTOA) measurement values corresponding to different timing error groups (TEGs); and a first transmitting unit, configured to transmit the RTOA measurement values or a difference between the RTOA measurement values corresponding to different TEGs to a location management function (LMF).

An embodiment of the present disclosure provides an error compensation apparatus, including:

a second obtaining unit, configured to obtain RTOA measurement values corresponding to different TEGs or a difference between the RTOA measurement values corresponding to different TEGs; and
an error compensation unit, configured to perform error compensation according to the RTOA measurement values or the difference between the RTOA measurement values.

An embodiment of the present disclosure further provide a processor readable storage medium, on which a computer program is stored. When the computer program is executed by a processor, steps of the above error measurement method or steps of the above error compensation method are implemented.
The beneficial effects of the above-mentioned technical solutions of the present disclosure are as follows.
In the embodiments of this application, a base station measures SRSs transmitted by a terminal to obtain RTOA measurement values corresponding to different TEGs, and transmits the RTOA measurement values or a difference between the RTOA measurement values corresponding to different TEGs to a LMF. In this way, the LMF uses the difference between different RTOA measurement values as an error compensation value to compensate positioning errors caused by different TEGs for transmission and reception, so as to obtain more accurate positioning results.

## BRIEF DESCRIPTION OF THE DRAWINGS

FIG. 1 shows a schematic diagram of a reception timing error of a terminal during a downlink positioning process;
FIG. 2 shows a schematic diagram of a transmission timing error of a terminal during an uplink positioning process;
FIG. 3 shows a schematic flowchart of an error measurement method according to an embodiment of the present disclosure;
FIG. 4 shows a schematic flowchart of an error compensation method according to an embodiment of the present disclosure;
FIG. 5 shows a first schematic structural diagram of an error measurement apparatus according to an embodiment of the present disclosure;
FIG. 6 shows a first schematic structural diagram of an error compensation apparatus according to an embodiment of the present disclosure;
FIG. 7 shows a second schematic structural diagram of an error measurement apparatus according to an embodiment of the present disclosure; and
FIG. 8 shows a second schematic structural diagram of an error compensation apparatus according to an embodiment of the present disclosure.

## DETAILED DESCRIPTION

In order to make a to-be-solved technical problem, a technical solution and advantages of the present disclosure clearer, a detailed description will be given below in conjunction with the accompanying drawings and specific embodiments. In the following description, specific details such as specific configurations and components are provided merely to assist in a comprehensive understanding of the embodiments of the present disclosure. Therefore, those skilled in the art should be appreciated that various changes and modifications can be made to the embodiments described herein without departing from the scope and spirit of the present disclosure. In addition, for clarity and conciseness, descriptions of known functions and constructions have been omitted.
It should be appreciated that "an embodiment" or "one embodiment" mentioned throughout the specification means that specific features, structures, or characteristics related to the embodiment are included in at least one embodiment of the present disclosure. Therefore, words "in an embodiment" or "in one embodiment" appearing throughout the entire specification may not necessarily refer to the same embodiment. In addition, these specific features, structures, or characteristics can be combined in one or more embodiments in any suitable manner.
In various embodiments of the present disclosure, it should be appreciated that the size of a sequence number of each of the following processes does not imply the order of execution, and the execution order of each process should be determined based on the function and internal logic of the each process, which should not constitute any limitations on the implementation process of the present disclosure.

The term "and/or" in the embodiments of the present disclosure describes an association relationship of associated objects, indicating that there may be three types of relationships. For example, A and/or B, which can represent three situations of A alone, both A and B, and B alone. The character "/" generally indicates that the associated objects before and after the character is in an "or" relationship.

The term "multiple" in the embodiments of the present disclosure refers to two or more, and other quantifiers are similar thereto.

The technical solution of embodiments of the present disclosure will be clearly and completely described hereinafter in conjunction with the accompanying drawings. Apparently, the described embodiments merely relate to a part of, rather than all of, the embodiments of the present disclosure, and based on these embodiments, a person of ordinary skill in the art may obtain other embodiments without creative effort, which shall also fall within the scope of the present disclosure.

To describe the embodiments of the present disclosure, some of concepts used in the following description will be first explained.

In positioning of wireless communications, a timing error of transmitting a positioning reference signal and a timing error of receiving a positioning reference signal directly affect the accuracy of time measurement value and the accuracy of positioning calculation. A transmitter (such as UE or TRP) may have multiple RF transmission chains (RF Tx chains). The transmitter may use different RF Tx chains to transmit positioning reference signals. Multiple RF Tx chains may have the same or different transmission delay errors. A receiver (such as UE or TRP) may have multiple RF reception chains (RF Rx Chains). The receiver may use different RF Rx chains to receive positioning reference signals. Multiple RF Rx chains may have the same or different transmission time delay errors.

1. Transmission timing error in wireless positioning:
the transmission timing error includes: a group delay introduced by a filter when a signal is generated in a baseband and transmitted out at an RF end or a residual value of the corrected group delay; and a delay deviation caused by a deviation between a reference phase center and a physical antenna phase center.

2. Reception timing error:
the reception timing error includes: a group delay introduced by a filter from a signal reception time at an RF end to a time before signal processing at the baseband side, or a residual value of the corrected group delay; and a delay deviation caused by a deviation between a reference phase center and a physical antenna phase center.

3. Timing error group (TEG):
in order to improve the positioning accuracy, the definition of timing error group (TEG) is introduced, where:

(1) UE Tx timing error group (UE Tx TEG):
one UE Tx TEG is associated with one or more uplink sounding reference signal (UL SRS) resources; in the same UE Tx TEG, transmission timing errors of UL SRS resources shall be within the same range.

(2) UE Rx timing error group (UE Rx TEG):
one UE Rx TEG is associated with one or more UE positioning measurements; in the same UE Rx TEG, reception timing errors of UE positioning measurement values shall be within the same range.

(3) TRP Tx Timing error group (TRP Tx TEG):
one TRP Tx TEG is associated with one or more downlink positioning reference signal (DL PRS) resources; transmission timing errors of DL PRSs in the same TRP Tx TEG shall be within the same range.

(4) TRP Rx Timing error group (TRP Rx TEG):
one TRP Rx TEG is associated with one or more TRP positioning measurement values; reception timing errors of positioning measurements in the same TRP Rx TEG shall be within the same range.

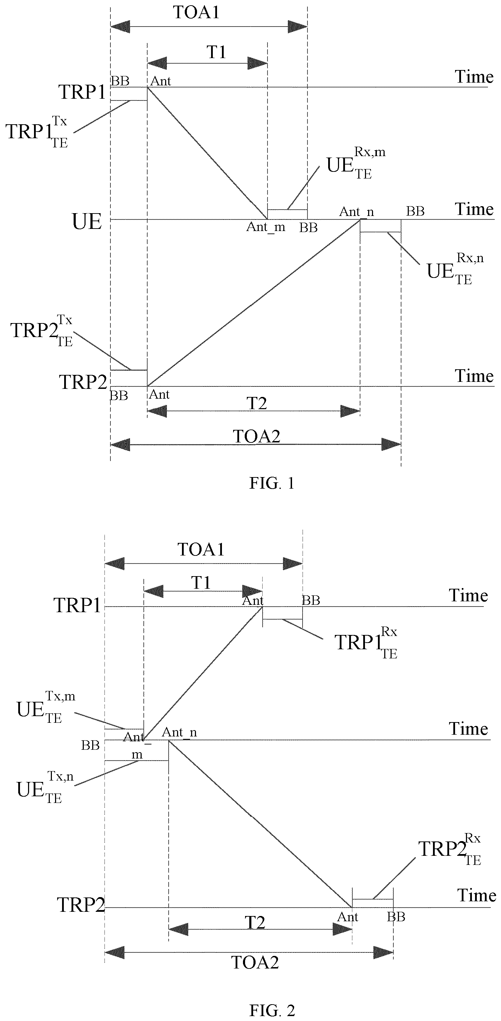

Taking a downlink positioning process (DL-TDOA) as an example, FIG. 1 shows a schematic diagram of the impact of UE reception timing errors on TOA measurement values. As shown in FIG. 1, it is assumed that there are two TRPs (TRP1 and TRP2) simultaneously transmitting DL PRS signals, and a UE has multiple Rx RF chains. The UE receives a DL PRS from TRP1 through the m-th Rx RF link, the measured TOA1 from TRP1 to the UE is:

$$\text{TRP1}_{\text{TE}}^{\text{Tx}} + \text{T1} + \text{UE}_{\text{TE}}^{\text{Rx,m}}$$, and the reception timing error is $\text{UE}_{\text{TE}}^{\text{Rx,m}}$. The UE receives a DL PRS of TRP2 through the n-th Rx RF link, the measured TOA2 from TRP2 to UE is: $$\text{TRP2}_{\text{TE}}^{\text{Tx}} + \text{T2} + \text{UE}_{\text{TE}}^{\text{Rx,n}}$$, and the reception timing error is $\text{UE}_{\text{TE}}^{\text{Rx,n}}$.

A measurement value of a reference signal time difference (Reference Signal Time Difference, RSTD) is used for positioning calculation for DL-TDOA positioning. The RSTD measurement value of the UE for TRP2 and TRP 1 are:

$$\mathrm{RSTD}_{\mathrm{TRP1,TRP2}} = \mathrm{TOA2} - \mathrm{TOA1}$$

$$= (\mathrm{TRP2}_{\mathrm{TE}}^{\mathrm{Tx}} + \mathrm{T2} + \mathrm{UE}_{\mathrm{TE}}^{\mathrm{Rx,n}}) - (\mathrm{TRP1}_{\mathrm{TE}}^{\mathrm{Tx}} + \mathrm{T1} + \mathrm{UE}_{\mathrm{TE}}^{\mathrm{Rx,m}})$$

$$= (\mathrm{T2} - \mathrm{T1}) + (\mathrm{TRP2}_{\mathrm{TE}}^{\mathrm{Tx}} - \mathrm{TRP1}_{\mathrm{TE}}^{\mathrm{Tx}}) + (\mathrm{UE}_{\mathrm{TE}}^{\mathrm{Rx,n}} - \mathrm{UE}_{\mathrm{TE}}^{\mathrm{Rx,m}})$$

T1 and T2 represent a delay of a signal propagation from TRP1 to UE and a delay of a signal propagation from TRP2 to UE, respectively. If it is assumed that TRP1 and TRP2 are completely synchronized in time when transmitting a DL PRS, that is: $\mathrm{TRP2}_{\mathrm{TE}}^{\mathrm{Tx}} = \mathrm{TRP1}_{\mathrm{TE}}^{\mathrm{Tx}}$, then the RSTD measurement value is affected by a difference ($\mathrm{UE}_{\mathrm{TE}}^{\mathrm{Rx,n}} - \mathrm{UE}_{\mathrm{TE}}^{\mathrm{Rx,m}}$) between UE reception timing errors $\mathrm{UE}_{\mathrm{TE}}^{\mathrm{Rx,n}}$ and $\mathrm{UE}_{\mathrm{TE}}^{\mathrm{Rx,m}}$.

Whether the m-th Rx RF chain and the n-th Rx RF chain of the UE can be divided into a same UE Rx TEG depends on whether $\mathrm{UE}_{\mathrm{TE}}^{\mathrm{Rx,m}}$ and $\mathrm{UE}_{\mathrm{TE}}^{\mathrm{Rx,n}}$ is close. For example, if a difference between $\mathrm{UE}_{\mathrm{TE}}^{\mathrm{Rx,n}}$ and $\mathrm{UE}_{\mathrm{TE}}^{\mathrm{Rx,m}}$ is relatively small, the difference ($\mathrm{UE}_{\mathrm{TE}}^{\mathrm{Rx,n}} - \mathrm{UE}_{\mathrm{TE}}^{\mathrm{Rx,m}}$) has a minimal influence on RSTD measurement, and the m-th Rx RF chain and the n-th Rx RF chain of the UE can be divided into a same UE Rx TEG; or otherwise, the m-th Rx RF chain and the n-th Rx RF chain of the UE cannot be divided into the same UE Rx TEG.

Taking an uplink positioning process (UL-TDOA) as an example, FIG. 2 shows a schematic diagram of the impact of UE reception timing errors on TOA measurement values. As shown in FIG. 2, it is assumed that there are two TRPs (TRP1 and TRP2) simultaneously transmitting DL PRS signals, a UE has multiple Tx RF chains for transmitting UL SRSs, and TRP1 receives a UL SRS transmitted by the UE using the m-th Tx RF chain, with a transmission timing error of $\mathrm{UE}_{\mathrm{TE}}^{\mathrm{Tx,m}}$; RTOA1 from UE to TRP1 measured by TRP1 is $\mathrm{UE}_{\mathrm{TE}}^{\mathrm{Tx,m}} + \mathrm{T1} + \mathrm{TRP1}_{\mathrm{TE}}^{\mathrm{Rx}}$; TRP2 receives a UL SRS transmitted by UE using the n-th Tx RF link, with a transmission timing error of $\mathrm{UE}_{\mathrm{TE}}^{\mathrm{Tx,n}}$, RTOA2 from UE to TRP2 measured by TRP2 is $\mathrm{UE}_{\mathrm{TE}}^{\mathrm{Tx,n}} + \mathrm{T2} + \mathrm{TRP2}_{\mathrm{TE}}^{\mathrm{Rx}}$. A difference between RTOA measurements, namely TDOA, is used for positioning calculation for UL-TDOA positioning. A difference between the measured values of RTOA2 and RTOA1 is:

$$\mathrm{TDOA}_{\mathrm{TRP1,TRP2}} = \mathrm{RTOA2} - \mathrm{RTOA1}$$

$$= (\mathrm{UE}_{\mathrm{TE}}^{\mathrm{Tx,n}} + \mathrm{T2} + \mathrm{TRP2}_{\mathrm{TE}}^{\mathrm{Rx}}) - (\mathrm{UE}_{\mathrm{TE}}^{\mathrm{Tx,m}} + \mathrm{T1} + \mathrm{TRP1}_{\mathrm{TE}}^{\mathrm{Rx}})$$

$$= (\mathrm{T2} - \mathrm{T1}) + (\mathrm{TRP2}_{\mathrm{TE}}^{\mathrm{Rx}} - \mathrm{TRP1}_{\mathrm{TE}}^{\mathrm{Rx}}) + (\mathrm{UE}_{\mathrm{TE}}^{\mathrm{Tx,n}} - \mathrm{UE}_{\mathrm{TE}}^{\mathrm{Tx,m}})$$

T1 and T2 represent signal transmission delays from UE to TRP1 and from UE to TRP2, respectively. If it is assumed that TRP1 and TRP2 are completely synchronized in time when receiving a UL SRS, that is, $\mathrm{TRP2}_{\mathrm{TE}}^{\mathrm{Rx}} = \mathrm{TRP1}_{\mathrm{TE}}^{\mathrm{Rx}}$, then $\mathrm{TDOA}_{\mathrm{TRP1,TRP2}}$ is only affected by a difference ($\mathrm{UE}_{\mathrm{TE}}^{\mathrm{Tx,n}} - \mathrm{UE}_{\mathrm{TE}}^{\mathrm{Tx,m}}$) between transmission timing errors $\mathrm{UE}_{\mathrm{TE}}^{\mathrm{Tx,n}}$ and $\mathrm{UE}_{\mathrm{TE}}^{\mathrm{Tx,m}}$. Whether the m-th Tx RF chain and the n-th Tx RF chain of a UE are divided into a same UE Tx TEG depends on whether $\mathrm{UE}_{\mathrm{TE}}^{\mathrm{Tx,m}}$ and $\mathrm{UE}_{\mathrm{TE}}^{\mathrm{Tx,n}}$ are close in value. For example, if a difference between $\mathrm{UE}_{\mathrm{TE}}^{\mathrm{Tx,n}}$ and $\mathrm{UE}_{\mathrm{TE}}^{\mathrm{Tx,m}}$ is relatively small, the difference ($\mathrm{UE}_{\mathrm{TE}}^{\mathrm{Tx,n}} - \mathrm{UE}_{\mathrm{TE}}^{\mathrm{Tx,m}}$) has the minimal influence on RSTD measurement, and the m-th Tx RF chain and the n-th Tx RF chain of the UE can be divided into the same UE Tx TEG; or otherwise, the m-th Tx RF chain and the n-th Tx RF chain of the UE cannot be divided into the same UE Tx TEG.

Specifically, embodiments of the present disclosure provide an error measurement and an error compensation method, and apparatuses, which define a TEG based error measurement and compensation method, so as to solve the problem of inaccurate positioning of a positioning method in related technologies.

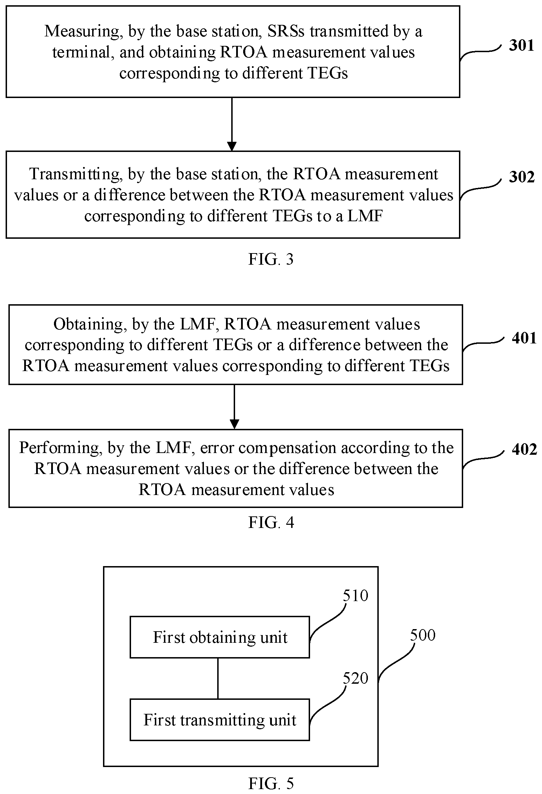

As shown in FIG. 3, an embodiment of the present disclosure provides an error measurement method, applied to a base station. The method includes the following steps.

Step 301: measuring, by the base station, sounding reference signals (SRSs) transmitted by a terminal, and obtaining relative time of arrival (RTOA) measurement values corresponding to different timing error groups (TEGs).

The base station may also refer to a TRP included in the base station. For transmitting SRS signals for positioning measurement by a terminal to a base station, the terminal may transmit SRS signals corresponding to a same UE Tx TEG, and the base station receives the SRS signals based on different TRP Rx TEGs; and/or, the terminal transmits SRS signals corresponding to different UE Tx TEGs, and the base station receives the SRS signals based on a same TRP Rx TEG.

The base station may obtain RTOA measurement values corresponding to different TEGs by measuring the received SRS signals. The RTOA measurement values corresponding to different TEGs may be RTOA measurement values corresponding to different Tx TEGs, or RTOA measurement values corresponding to different Rx TEGs.

Optionally, before transmitting the SRS signals, the terminal divides the Tx TEGs of different resources to obtain different UE Tx TEGs; before receiving the SRS signals from the terminal, the base station divides the Rx TEGs with different measurement values to obtain different TRP Rx TEGs.

Step 302: transmitting, by the base station, the RTOA measurement values or a difference between the RTOA measurement values corresponding to different TEGs to a location management function (LMF).

After obtaining the RTOA measurement values corresponding to different TEGs, the base station may transmit the RTOA measurement values to the LMF, and the LMF calculates the difference between the RTOA measurement values corresponding to different TEGs and performs error compensation based on the difference. Alternatively, after obtaining the RTOA measurement values corresponding to different TEGs, the base station calculates the difference between the RTOA measurement values corresponding to different TEGs and transmits the difference to the LMF, and the LMF performs error compensation based on the difference.

It should be noted that in the embodiments, the difference between the RTOA measurement values corresponding to different TEGs is an error compensation value used by the LMF for error compensation. The LMF compensates for positioning results based on the error compensation value.

In the embodiment of this application, a base station measures SRSs transmitted by a terminal to obtain RTOA measurement values corresponding to different TEGs, and transmits the RTOA measurement values or a difference between the RTOA measurement values corresponding to different TEGs to a LMF. In this way, the LMF uses the difference between the different RTOA measurement values as an error compensation value to compensate for a positioning error caused by different reception and transmission TEGs, thereby obtaining positioning results with the higher accuracy.

As an optional embodiment, the step 301 may include:

step 3011: receiving, respectively through different transmission-reception point reception timing error groups (TRP Rx TEGs), same SRSs transmitted by the terminal, and measuring the SRSs to obtain RTOA measurement values respectively corresponding to different TRP Rx TEGs, where in an embodiment, the difference between the RTOA measurement values corresponding to different TEGs includes a difference between RTOA measurement values corresponding to different TRP Rx TEGs; and/or

step 3012: receiving, respectively through a same TRP Rx TEG, SRSs corresponding to different user equipment transmission timing error groups (UE Tx TEGs) transmitted by the terminal, measuring the different SRSs respectively to obtain RTOA measurement values respectively corresponding to different UE Tx TEGs, where in an embodiment, the difference between the RTOA measurement values corresponding to different TEGs includes a difference between RTOA measurement values corresponding to different UE Tx TEGs.

For step 3011, a base station or a TRP may measure, based on different TRP Rx TEGs, same SRS signals transmitted by a same UE to obtain RTOA measurement values corresponding to different TRP Rx TEGs. The same SRS signals refers to SRSs transmitted by the terminal through a same UE Tx TEG. For example, the base station receiving, through different TRP Rx TEGs, the same SRSs transmitted by the terminal and measuring the SRSs to obtain the RTOA measurement values respectively corresponding to different TRP Rx TEGs may include: receiving, through a first TRP Rx TEG, a target SRS transmitted by the terminal, and measuring the target SRS to obtain a first measurement value; receiving, through a second TRP Rx TEG, the target SRS transmitted by the terminal, and measuring the target SRS to obtain a second measurement value, where the first TRP Rx TEG is different from the second TRP Rx TEG.

The base station may do subtraction between the RTOA measurement values corresponding to different TRP Rx TEGs as obtained, to obtain a difference between the RTOA measurement values corresponding to different TRP Rx TEGs, and may transmit the difference to the LMF. For example, in a case that TRP 1 receives SRS signals transmitted by a UE using Rx TEGi and Rx TEGj respectively, and the UE transmits the SRS signals by using a same Tx TEGm, then a difference between RTOA measurement values corresponding to Rx TEGi and Rx TEGj is calculated as follows:

an RTOA measurement value corresponding to Rx TEGi is: RTOA1 = Tx TEGm + propagation + Rx TEGi;
an RTOA measurement value corresponding to Rx TEGj is: RTOA2 = Tx TEGm + propagation + Rx TEGj;
a difference between the RTOA measurement values is: RTOA1 - RTOA2 = Rx TEGi - Rx TEGj.

Tx TEGm represents a transmission timing error for transmitting a SRS resource, propagation represents a delay of a signal propagation from UE to TRP1, Rx TEGi represents a reception timing error corresponding to the measurement value RTOA1, and Rx TEGj represents a reception timing error corresponding to the measurement value RTOA2.

For step 3012, a base station or a TRP measures, based on the same TRP Rx TEG, the SRS signals corresponding to different UE Tx TEGs transmitted by the same UE, to obtain the difference between the RTOA measurement values corresponding to different UE Tx TEGs of the UE. For example, the base station receiving, respectively through the same TRP Rx TEG, SRSs corresponding to different UE Tx TEGs transmitted by the terminal, and measuring the different SRSs respectively to obtain the measurement values respectively corresponding to different UE Tx TEGs may include: receiving, through a target TRP Rx TEG, a first SRS transmitted by the terminal, and measuring the first SRS to obtain a third measurement value; receiving, through the target TRP Rx TEG, a second SRS transmitted by the terminal, and measuring the second SRS to obtain a fourth measurement value, where UE Tx TEGs corresponding to the first SRS and the second SRS are different.

The base station may do subtraction between the RTOA measurement values corresponding to different UE Tx TEGs as obtained, to obtain a difference between RTOA measurement values of different UE Tx TEGs, and may transmit the difference to the LMF. For example, TRP1 uses a same Rx TEGi to receive SRS signals transmitted by UE, and UE uses different Tx TEGm and Tx TEGn to transmit SRS signals, the calculation formula is as follows:

an RTOA measurement value corresponding to Tx TEGm is: RTOA3 = Tx TEGm + propagation + Rx TEGi;
an RTOA measurement value corresponding to Tx TEGn is: RTOA4 = Tx TEGn + propagation + Rx TEGi;
a difference between the RTOA measurement values is: RTOA3 - RTOA4 = Tx TEGm - Tx TEGn.

Tx TEGm represents a transmission timing error of transmitting an SRS resource by using TEGm, Tx TEGn represents a transmission timing error of transmitting an SRS resource by using TEGn, propagation represents a delay of a signal propagation from UE to TRP 1, and Rx TEGi represents a reception timing error of the base station or the TRP for the RTOA measurement value.

The base station may report the RTOA measurement values corresponding to different TEGs to a LMF, or report the difference between the RTOA measurement values corresponding to different TEGs to enable the LMF to compensate for errors based on the difference.

Optionally, the transmitting, by the base station, the RTOA measurement values or the difference between the RTOA measurement values corresponding to different TEGs to the LMF needs to satisfy an effective time condition. If the effective time condition is satisfied, the operations in step 302 may be performed.

Specifically, whether a measurement time of the RTOA measurement values satisfies the effective time condition is determined based on TEG effective time information. The transmitting, by the base station, the RTOA measurement values or the difference between the RTOA measurement values corresponding to different TEGs to the location management function (LMF) includes: transmitting the RTOA measurement values or the difference between the RTOA measurement values corresponding to different TEGs to the LMF, in a case that the effective time condition is satisfied.

The TEG effective time information may be predefined by a protocol, or may be generated by a terminal or a base station. In a case that the TEG effective time information is generated by a terminal or a base station, the terminal or the base station may periodically or aperiodically transmit the TEG effective time information to the LMF. The effective time condition may mean that the division of the TEG is valid. Optionally, the TEG effective time information includes at least one of the following:

1) a TEG effective time period. The TEG effective time period may be set, and a measurement time period of the RTOA measurement values corresponding to different TEGs, a time period when the terminal transmits SRS signals, and an interval of the to-be-compensated measurement time period are located in the TEG effective time period, namely, T2 - T1 < T_TH, and it means that the measurement time of the RTOA measurement values satisfies the effective time condition, that is, the division of TEG is valid, where T1 is a median value of a to-be-compensated measurement time period, and T2 is a median value of a measurement time period for obtaining a difference for TEGs (i.e., the difference between the RTOA measurement values corresponding to different TEGs).

Optionally, the TEG effective time information includes:

2) a starting time and an ending time of a TEG effective time window. The starting time and the ending time of the TEG effective window may be defined, and a measurement time of the RTOA measurement value or a time when the terminal transmits SRS signals is located within the effective time window, it means that the measurement time of the RTOA measurement value satisfies the effective time condition, that is, the division of the TEG is valid.

Optionally, the TEG effective time information includes:

3) indication information for TEG re-division, the indication information may be periodically or aperiodically indicated; the indication information may indicate whether a TEG is re-divided, if a TEG is re-divided, it means that the division of the TEG corresponding to the RTOA measurement value is invalid, then a current measurement time of a RTOA measurement value does not satisfy the effective time condition; if the TEG is not re-divided, it means that the division of the TEG corresponding to the RTOA measurement value is still valid, and the current measurement time of the RTOA measurement value satisfies the effective time condition.

Optionally, the TEG effective time information includes:

4) indication information for a change situation of a TEG ID. The indication information may be periodically or non-periodically indicated; the indication information may indicate whether the TEG ID changes. If the TEG ID changes, it means that the division of a TEG corresponding to a RTOA measurement value is invalid, then the current measurement time of the RTOA measurement value does not meet the effective time condition; if the TEG ID does not change, it means that the division of the TEG corresponding to the RTOA measurement value is still valid, and the current measurement time of the RTOA measurement value meets the effective time condition.

Optionally, the TEG effective time information includes:

5) a validity period of a TEG ID. The amount of change of the TEG may be indicated periodically or aperiodically; the validity period of the TEG ID may be set. If a TEG ID corresponding to a RTOA measurement value is within the validity period, it indicates a measurement time of the RTOA measurement value meets the effective time condition; if the TEG ID corresponding to the RTOA measurement value is invalid, it means that the division of the TEG is invalid, and the measurement time of the RTOA measurement value does not meet the effective time condition.

Optionally, the TEG effective time information includes:

6) a mean value of a change rate of a timing error (TE). The mean value of the change rate of the TE may be periodically or non-periodically indicated. For example, an estimated mean value of the change rate of the TE with a certain granularity, such as: Rate = (TE(t2)- TE(t1)) / (t2 - t1). According to the change rate, it is determined whether the change of the TE affects the division of a TEG to which the TE belongs. For example, if the change of the TE causes a large difference in a transmission timing error of a UE, or a large difference in a reception timing error of a TRP, the TE and the changed TE cannot be divided into a same TEG, and it means that the division of the TE is invalid, that is, the division of the TEG being invalid.

Optionally, the TEG effective time information includes:

7) a variance of uncertainty (Uncertainty) of a TE. The variance of the uncertainty of the TE may be indicated periodically or aperiodically. The variance of the uncertainty is, for example, the variance of Rate. The change situation of TE is determined according to the variance of the uncertainty of TE, so as to determine whether the division of the TEG to which the TE belongs is valid.

Optionally, the TEG effective time information includes:

8) an amount of change in a TEG. The amount of change of the TEG may be indicated periodically or aperiodically. Whether a TEG is changed is determined according to the amount of change of the TEG. If there is a change, the current division of the TEG is invalid, and a measurement time of a TOA measurement value does not meet the effective time condition. Alternatively, an error caused by the time-varying feature may be compensated according to the amount of change, and at this time, it may be considered that the division of the TEG after compensation is valid.

Optionally, the TEG effective time information includes:

9) indication information for a change situation of a TEG association relationship. The indication information may be indicated periodically or aperiodically. Whether the division of a TEG is valid may be determined according to whether the TEG association relationship changes. In the case that the TEG association relationship does not change, the division of the TEG is valid, and if the TEG association relationship changes, the division of the TEG is invalid.

Optionally, it should be noted that, the base station transmits the RTOA measurement values or the difference between the RTOA measurement values corresponding to different TEGs to the LMF, when the measurement time of the RTOA measurement values satisfies the effective time condition. Optionally, the LMF determines whether the measurement time of the RTOA measurement values satisfies the effective time condition, after receiving the RTOA measurement value or the difference between the RTOA measurement values corresponding to different TEGs, and before performing error compensation according to the difference between the RTOA measurement values. When the effective time condition is met, the error compensation is performed according to the difference between the RTOA measurement values corresponding to different TEGs.

Optionally, for positioning schemes such as downlink, uplink and uplink+downlink (including RTT and UL-TDOA+DL-TDOA), the above effective time condition also needs to be met, that is, a measurement value of a changed TEG ID cannot be used for processing.

Optionally, after obtaining the relative time of arrival (RTOA) measurement values corresponding to different TEGs, the method further includes: obtaining an average value of RTOA measurement values corresponding to K measurement times, or obtaining an average value of difference values of RTOA measurement values corresponding to K measurement times, where K is greater than or equal to 2, and the K measurement times satisfy the effective time condition.

Optionally, the transmitting the RTOA measurement values, or the differences between the RTOA measurement values corresponding to different TEGs to the LMF includes: transmitting the average value of the RTOA measurement values or the average value of the differences to the LMF.

In an embodiment, in order to obtain a more stable difference of RTOA measurement values corresponding to TEGs, the base station may take the average of multiple measurements corresponding to multiple grouping times that meet the effective time condition, for example: taking the average value of the RTOA measurement values of different TEGs at the K times that meet the effective time condition, or taking the average value of the differences of the RTOA measurement values at the K times. Optionally, the RTOA measurement values corresponding to different TEGs may further be smoothed to obtain the higher measurement accuracy.

The implementation process of the error measurement method will be described below through specific embodiments.

Embodiment 1: by taking an uplink double-difference positioning process as an example, in the process of using the double-difference positioning solution, when a TRP receives signals from different UEs, Rx TEG IDs are different, so different TEGs IDs will cause errors.

In the uplink difference-to-difference scheme, for the reason of the angle, TRPi uses different Rx TEGs for a target UE and a reference UE, resulting in a residual error between Rx TEGs of the TRPi after difference-to-difference. In an embodiment, the error may be obtained through the following steps, and provided to a LMF for error compensation.

For the uplink double-difference positioning scheme, formulas for single-difference and double-difference are given as follows:

$$SD(UE) = RTOA_{UE \to TRPi} - RTOA_{UE \to TRPj} = TE_{TRPi,Rx\_TEGm} - TE_{TRPj,Rx\_TEGn} + Prop_{UE \to TRPi} - Prop_{UE \to TRPj} \tag{1};$$

$$SD(UE_{ref}) = RTOA_{UEref \to TRPi} - RTOA_{UEref \to TRPj} = TE_{TRPi,Rx\_TEGp} - TE_{TRPj,Rx\_TEGn} + Prop_{UEref \to TRPi} - Prop_{UEref \to TRPj} \tag{2};$$

$$DD_{UL}(UE,UE_{ref}) = SD(UE) - SD(UE_{ref}) = Prop_{UE \to TRPi} - Prop_{UE \to TRPj} - (Prop_{UEref \to TRPi} - Prop_{UEref \to TRPj} \tag{3}.$$

The above formulas (1), (2) and (3) are double-difference processes. In formula (1), SD(UE) represents a single-difference value of RTOA measurement values of a target UE transmitting a SRS signal to TRPi and TRPj, and $RTOA_{UE \to TRPi}$ and $RTOA_{UE \to TRPj}$ respectively represent RTOA measurement values corresponding to transmissions that the UE transmits a SRS resource to TRPi and TRPj, $TE_{TRPi,Rx\_TEGm}$ represents a receiving timing error corresponding to a measurement value $RTOA_{UE \to TRPi}$, $TE_{TRPj,Rx\_TEGn}$ represents a receiving timing error corresponding to a measurement value $RTOA_{UE \to TRPj}$, $Prop_{UE \to TRPi}$ represents a delay of a signal propagation from the target UE to TRPi, and $Prop_{UE \to TRPj}$ represents a delay of a signal propagation from the target UE to TRPj.

In formula (2), SD(UE_{ref}) represents a difference value between RTOA measurement values of a transmission that the reference UE transmits a SRS signal to TRPi and TRPj, $RTOA_{UEref \to TRPi}$ and $RTOA_{UEref \to TRPj}$ respectively represent the RTOA measurement values corresponding to transmissions that the reference UE transmits the SRS signal to TRPi and TRPj, and $TE_{TRPi,Rx\_TEGp}$ represents a receiving timing error corresponding to a measurement value $RTOA_{UEref \to TRPi}$, $TE_{TRPj,Rx\_TEGn}$ represents a receiving timing error corresponding to a measurement value $RTOA_{UEref \to TRPj}$, $Prop_{UEref \to TRPi}$ represents a delay of a signal propagation from the reference UE to TRPi, $Prop_{UEref \to TRPj}$ represents a delay of a signal propagation from the reference UE to TRPj.

A prerequisite for eliminating the Rx TEG on the TRP side is that the TRPi uses a same Rx TEG when receiving signals from the target UE and the reference UE. If TRPi cannot use TEGm, and can only use Rx TEGp (that is, using different TEGs IDs) to receive an SRS signal from the target UE due to the angle problem, the Rx TEG on the TRP side cannot be completely eliminated by double differences.

In this case, the reference UE may use a same Tx TEG to transmit uplink signals to TRPi, TRPi uses different Rx TEGs (TEGm and TEGp) to receive the signals, and a difference value between different Rx TEGs of the TRPi may be obtained after a single-difference operator is performed on RTOA measurement values received and measured by different Rx TEGs. This step may be completed by the target UE or the reference UE, and the corresponding effective time condition shall be met.

The effective time condition is for example: a measurement time period for TEGm and TEGp of the TRPi, and a measurement time period of the TRPi for the target UE and the reference UE, and an interval between to-be-compensated measurement time periods are all within an effective time period predefined by protocols (the effective time period may be preset by the TRP, or transmitted to the TRP by the LMF or the UE through signaling).

It should be noted that when obtaining the difference value between RTOA measurement values of different Rx TEGs of TRPi, multiple measurements may be performed and an average value of them is taken, and each measurement further needs to meet the above valid time condition. Finally, according to the difference between the RTOA measurement values corresponding to the obtained Rx TEGp (corresponding to the reference UE) and Rx TEGm (corresponding to the target UE), the LMF compensates errors in measurement values of positioning measurements, which can realize the elimination of the Rx TEG of the TRPi. If the same problem occurs in the TRPj, a similar process can be adopted, and details will not be described here.

A description is given below regarding steps of performing TEG measurement and compensation in the double-difference process described above.

When performing uplink double-difference positioning, if the above case occurs that the TRPi uses different Rx TEGs for the target UE and the reference UE, the following operations may be performed.

Step 1: a UE divides Tx TEGs of different SRS resources.

Step 2: the UE transmits same SRSs (that is, the SRSs corresponding to a same UE Tx TEG) to a same base station/TRP. Optionally, the TRP may notify the UE to adopt the same Tx TEG in advance through signaling.

Step 3: the base station divides Rx TEGs of different measurement values.

Step 4: the base station receives the SRS signals transmitted by the UE, and the SRS signals correspond to the same UE Tx TEG.

Optionally, the base station may use different TRP Rx TEGs to respectively receive same SRSs, may measure the SRSs through different TRP Rx TEGs respectively, and may obtain RTOA measurement values corresponding to different TRP Rx TEGs.

A difference operator may be performed on the RTOA measurement values corresponding to different TRP Rx TEGs, to obtain differences between the RTOA measurement values corresponding to different TRP Rx TEGs.

It should be noted that the average of multiple measurements corresponding to multiple grouping times within the effective time may be taken, so as to obtain the more stable TEG differences, and all the measurement times need to meet the effective time condition.

Step 5: the base station reports, to a LMF, the RTOA measurement values or the differences between the RTOA measurement values corresponding to different TEGs obtained in step 4.

Step 6: the LMF obtains the RTOA measurement values corresponding to different TRP Rx TEGs, or the differences between the RTOA measurement values corresponding to different TEGs.

In the case that the LMF obtains the RTOA measurement values corresponding to different TRP Rx TEGs, the LMF perform a difference operator on the RTOA measurement values corresponding to different TRP Rx TEGs, to obtain the differences of the RTOA measurement values.

The above steps 1 to 6 are time periods for obtaining the error compensation value.

Step 7: the aforementioned double-difference value is used for compensating corresponding errors in a case that the differences between the RTOA measurement values corresponding to different TEGs are obtained in step 6, and an effective time condition is met.

Whether to perform error compensation can be determined according to the effective time condition, and position calculation can be performed, so as to obtain a positioning result with the higher accuracy.

Embodiment 2: by taking an uplink double-difference positioning process as an example, in the process of uplink double-difference, due to multiple control panels (panels) of a user equipment, it may appear that a target UE uses different Tx TEGs for TRPi and TRPj, resulting in a residual error between Tx TEGs of the target UE after double-difference positioning. In an embodiment, the error may be obtained through the following steps, and provided to a LMF for compensation.

For the uplink double-difference positioning scheme, formulas for single-difference and double-difference are given as follows:

$$SD(UE) = RTOA_{UE \to TRPi} - RTOA_{UE \to TRPj} = TE_{TRPi,Rx\_TEGm} - TE_{TRPj,Rx\_TEGn} + TE_{UE,Tx\_TEGu} - TE_{UE,Tx\_TEGq} + Prop_{UE \to TRPi} - Prop_{UE \to TRPj} \qquad (4);$$

$$SD(UE_{ref}) = RTOA_{UE_{ref} \to TRPi} - RTOA_{UE_{ref} \to TRPj} = TE_{TRPi,Rx\_TEGm} - TE_{TRPj,Rx\_TEGn} + TE_{UE\_ref,Tx\_TEGv} - TE_{UE\_ref,Tx\_TEGv} + Prop_{UE_{ref} \to TRPi} - Prop_{UE_{ref} \to TRPj} \qquad (5);$$

$$DD_{UL}(UE,UE_{ref}) = SD(UE) - SD(UE_{ref}) = Prop_{UE \to TRPi} - Prop_{UE \to TRPj} - (Prop_{UE_{ref} \to TRPi} - Prop_{UE_{ref} \to TRPj}) \ ; \qquad (6).$$

The above formulas (4), (5) and (6) are double-difference processes. In the formula (4), $TE_{UE,Tx\_TEGu}$ represents a timing error of a transmission that a SRS resource is transmitted by using TEGu of the target UE, $TE_{UE,Tx\_TEGq}$ represents a timing error of a transmission that the SRS resource is transmitted by using TEGq of the target UE, $TE_{TRPi,Rx\_TEGm}$ represents a reception timing error corresponding to a measurement value $RTOA_{UE\_TRPi}$, $TE_{TRPj,Rx\_TEGn}$ represents a reception timing error corresponding to a measurement value $RTOA_{UE \to TRPj}$. In the formula (5), $TE_{UE\_ref,Tx\_TEGv}$ represents a timing error of a transmission that the SRS resource is transmitted by using TEGv of the reference UE.

A prerequisite for eliminating the Tx TEG on the UE side is that the UE uses a same Tx TEG when transmitting a SRS signal to TRPi and TRPj. In the case that the target UE has multiple panels, the target UE cannot use Tx TEGu, and can only use Tx TEGq to transmit the SRS signal, causing that the double-difference cannot completely eliminate the Tx TEG on the UE side.

In this case, the target UE may use different Tx TEGs (TEGu and TEGq) to transmit an uplink signal to TRPi or TRPj, and the TRPi uses a same Rx TEG to receive the signals, and a single-difference operator is performed on RTOA measurement values corresponding to different Tx TEGs, the differences between different Tx TEGs of the UE may be obtained. This step is performed by the target UE, and the corresponding effective time condition must be met.

The effective time condition is for example: a measurement time period for TEGu and TEGq of the UE, and transmitting times of TRPi and TRPj for a UE, and a time period for obtaining an error compensation value are all within an effective window (a starting time and an ending time of the effective window may be predefined by the UE, or may be transmitted to the UE by a LMF or a TRP through signaling).

It should be noted that, when obtaining a difference between the RTOA measurement values corresponding to different Tx TEGs of a UE, an average value may be obtained through multiple measurements, and each measurement also needs to meet the above valid time condition. Finally, a LMF compensates errors in the measurement values of positioning measurement according to the obtained difference of the RTOA measurement value corresponding to Tx TEGu and Tx TEGq, so as to realize the elimination of the Tx TEG of the UE.

A description is given below regarding steps of performing TEG measurement and compensation in the double-difference process described above.

When performing uplink double-difference positioning, if the above case occurs that the target UE uses different Tx TEGs for TRPi and TRPj, the following operations may be performed.

Step 1: a UE performs a division on Tx TEGs of different SRS resources.

Step 2: the UE transmits different SRSs (that is, SRSs corresponding to different UE Tx TEGs) to a same base station/TRP. Optionally, the UE may notify the TRP in advance of using the same Rx TEG through signaling.

Step 3: the base station performs a division on Rx TEGs of different measurement values.

Step 4: the base station receives the SRS signals corresponding to different UE Tx TEGs transmitted by the UE.

The base station may use the same TRP Rx TEG to receive the SRS signals corresponding to different UE Tx TEGs transmitted by the UE, and may perform timing measurement to obtain RTOA measurement values corresponding to different UE Tx TEGs.

The base station may also perform a single-difference operator on the RTOA measurement values corresponding to different UE Tx TEGs, to obtain difference between the RTOA measurement values of different UE Tx TEGs.

It should be noted that the average of multiple measurements corresponding to multiple grouping times within the effective time may be taken, so as to obtain the more stable TEG difference, and all the measurement times need to meet the effective time condition.

Step 5: the base station reports, to a LMF, the RTOA measurement values or the difference between the RTOA measurement values corresponding to different TEGs obtained in step 4.

Step 6: the LMF obtains the RTOA measurement values corresponding to different UE Tx TEGs, or the difference between the RTOA measurement values corresponding to different UE Tx TEGs.

In the case that the LMF obtains the RTOA measurement values corresponding to different UE Tx TEGs, a difference operator is performed on the RTOA measurement values corresponding to different UE Tx TEGs, to obtain the difference of the RTOA measurement values.

The above steps 1 to 6 are time periods for obtaining the error compensation value.

Step 7: the aforementioned double-difference value is used for compensating corresponding errors in a case that the difference between the RTOA measurement values corresponding to different Tx TEGs is obtained in step 6, and an effective time condition is met.

Whether to perform error compensation can be determined according to the effective time condition, and position calculation can be performed, so as to obtain a positioning result with the higher accuracy.

Embodiment 3: by taking an uplink double-difference positioning process based on a round-trip time (Round-Trip Time, RTT) delay as an example, in the process of using the double-difference positioning solution, when a TRP receives signals from different UEs, Rx TEG IDs are different, so different TEGs IDs may cause errors.

In the RTT double-difference scheme, for the reason of the angle, TRPi uses different Rx TEGs for a target UE and a reference UE, causing a residual error between Rx TEGs of the TRPi after double-difference. In an embodiment of this application, the error may be obtained through the following steps, and provided to a LMF for error compensation.

For the RTT double-difference positioning scheme, formulas for single-difference and double-difference are given as follows:

$$SD(UE) = RTT_{UE \to TRPi} - RTT_{UE \to TRPj} = 2Prop_{TRPi \to UE} - 2Prop_{TRPj \to UE} + TE_{TRPi,Rx\_TEGm} + TE_{TRPi,Tx\_TEGn} - TE_{TRPj,Rx\_TEGu} - TE_{TRPj,Tx\_TEGv} \tag{7};$$

$$SD(UE_{ref}) = RTT_{UE_{ref} \leftrightarrow TRPi} - RTT_{UE_{ref} \leftrightarrow TRPj} = 2Prop_{TRPi \to UE_{ref}} - 2Prop_{TRPj \to UE_{ref}} + TE_{TRPi,Rx\_TEGp} + TE_{TRPi,Tx\_TEGn} - TE_{TRPj,Rx\_TEGu} - TE_{TRPj,Tx\_TEGv} \tag{8};$$

$$DD_{UL}(UE,UE_{ref}) = SD(UE) - SD(UE_{ref}) = 2Prop_{TRPi \to UE} - 2Prop_{TRPj \to UE} - 2Prop_{TRPi \to UE_{ref}} - 2Prop_{TRPj \to UE_{ref}} \tag{9}.$$

The above formulas (7), (8) and (9) are the RTT double-difference processes. In formula (7), $RTT_{UE \to TRPi}$ represents a measured value of a difference between transmission and reception times between a target UE and TRPi, $RTT_{UE \leftrightarrow TRPj}$ represents a measured value of a difference between transmission and reception times between a target UE and TRPj, $Prop_{TRPi \to UE}$ represents a delay of a signal propagation from TRPi to the target UE, and $Prop_{TRPj \to UE}$ represents a delay of a signal propagation from TRPj to the target UE, $TE_{TRPi,RX\_TEGm}$ represents a receiving timing error corresponding to a measurement value $RTT_{UE \leftrightarrow TRPi}$, $TE_{TRPi,Tx\_TEGn}$ represents a timing error of a transmission that a positioning reference signal (Positioning Reference Signal, PRS) resource is transmitted by using TEGn of TRPi, $TE_{TRPj,Rx\_TEGu}$ represents a receiving timing error corresponding to a measured value $RTT_{UE \leftrightarrow TRPj}$, and $TE_{TRPj,Tx\_TEGv}$ represents a timing error of a transmission that a PRS resource is transmitted by using TEGv of TRPj.

In formula (8), $RTT_{UE_{ref} \leftrightarrow TRPi}$ represents: a measured value of a transmission-reception time difference between the reference UE and TRPi, $RTT_{UE_{ref} \leftrightarrow TRPj}$ represents a measured value of a transmission-reception time difference between the reference UE and TRPj; $Prop_{TRPi,UE_{ref}}$ represents a delay of a signal propagation from TRPi to the reference UE, $Prop_{TRPj \to UE_{ref}}$ represents a delay of a signal propagation from TRPj to the reference UE, $TE_{TRPi,Rx\_TEGp}$ represents a receiving timing error corresponding to the measurement value $RTT_{UE_{ref} \leftrightarrow TRPi}$, $TE_{TRPi,TX\_TEGn}$ represents a timing error of a transmission that a PRS resource is transmitted by TEGn of TRPi; $TE_{TRPj,Rx\_TEGu}$ represents a receiving timing error corresponding to the measurement value $RTT_{UE_{ref} \leftrightarrow TRPj}$, $TE_{TRPj,Tx\_TEGV}$ represents a timing error of a transmission that the TEGv of a PRS resource is transmitted by using TEGv of the TRPj.

A prerequisite for eliminating the Rx TEG on the TRP side is that the TRPi uses the same Rx TEG when receiving signals from the target UE and the reference UE. If TRPi cannot use TEGm, and can only use Rx TEGp (that is, using different TEGs IDs) to receive the SRS signal from the target UE due to the angle problem, the Rx TEG on the TRP side cannot be completely eliminated by double difference.

In this case, the reference UE may use a same Tx TEG to transmit uplink signals to TRPi, TRPi uses different Rx TEGs (TEGm and TEGp) to receive the signals, and a difference value between different Rx TEGs of the TRPi can be obtained after a single-difference operator is performed on RTOA measurement values received and measured by different Rx TEGs. This step may be completed by the target UE or the reference UE, and the corresponding effective time condition shall be met.

The effective time condition is, for example: TEGm and TEGp for a TRP, and TEG corresponding to times when TRPi is receiving signals from the target UE and the reference UE, the TEG are been re-divided (the information may be a periodic indication by the base station according to a predefined periodicity, or it may also be an aperiodic indication, that is, when the indication is not received, it is considered that the TEG is not re-divided, and after the indication is received, it is considered that the TEG is re-divided).

It should be noted that when obtaining the difference value between RTOA measurement values of different Rx TEGs of TRPi, multiple measurements may be performed and an average value of them is taken, and each measurement further needs to meet the above valid time condition. Finally, according to the difference between the RTOA measurement values corresponding to the obtained Rx TEGp and Rx TEGm, the LMF compensates errors in measurement values of positioning measurements, which can realize the elimination of the Rx TEG of TRPi. The similar process can be adopted for TRPj.

A description is given below regarding steps of performing TEG measurement and compensation in the double-difference process described above.

When performing uplink double-difference positioning, if the above case occurs that the TRPi uses different Rx TEGs for the target UE and the reference UE, the following operations may be performed.

Step 1: a UE divides the Tx TEGs of different SRS resources.

Step 2: the UE transmits a same SRS (that is, the SRS corresponding to a same UE Tx TEG) to a same base station/TRP. Optionally, the TRP may notify the UE to adopt the same Tx TEG in advance through signaling.

Step 3: the base station divides Rx TEGs of different measurement values.

Step 4: the base station receives the SRS signal transmitted by the UE, and the SRS signal corresponds to the same UE Tx TEG.

Optionally, the base station may use different TRP Rx TEGs to respectively receive a same SRS transmitted by the UE, may measure the SRS through different TRP Rx TEGs respectively, and may obtain RTOA measurement values corresponding to different TRP Rx TEGs.

A difference operator may be performed on the RTOA measurement values corresponding to different TRP Rx TEGs, to obtain difference between the RTOA measurement values corresponding to different TRP Rx TEGs.

It should be noted that the average of multiple measurements corresponding to multiple grouping times within the effective time may be taken, so as to obtain the more stable TEG difference, and all the measurement times need to meet the effective time condition, that is, indexes of TEGs of these measurement times needs not to be changed.

Step 5: the base station reports, to a LMF, the RTOA measurement values or the difference between the RTOA measurement values corresponding to different TEGs obtained in step 4.

Step 6: the LMF obtains the RTOA measurement values corresponding to different TRP Rx TEGs, or the difference between the RTOA measurement values corresponding to different TEGs.

In the case that the LMF obtains the RTOA measurement values corresponding to different TRP Rx TEGs, the LMF perform a difference operator on the RTOA measurement values corresponding to different TRP Rx TEGs, to obtain the difference of the RTOA measurement values.

The above steps 1 to 6 are time periods for obtaining the error compensation value.

Step 7: the aforementioned double-difference value is used for compensating corresponding errors in a case that the difference between the RTOA measurement values corresponding to different TEGs is obtained in step 6, and an effective time condition is met.

Whether to perform error compensation can be determined according to the effective time condition, and position calculation can be performed, so as to obtain a positioning result with the higher accuracy.

In the embodiments of the present application, the base station measures a SRS transmitted by the terminal to obtain RTOA measurement values corresponding to different TEGs, and transmits the RTOA measurement values or a difference between the RTOA measurement values corresponding to different TEGs to a LMF, so that the LMF uses the difference between different RTOA measurement values as an error compensation value to compensate positioning errors caused by different TEGs for transmission and reception, so as to obtain a more accurate positioning result. In view of the time-varying nature of the TEG, the embodiment proposes the concept of TEG effective time, so that in the positioning process, whether to use RTOA measurement values at different times to perform corresponding processing may be determined according to the TEG effective time, which improves the TEG elimination solution.

As shown in FIG. 4, an embodiment of the present application provides an error compensation method, applied to a LMF. The method includes:

step 401, obtaining, by the LMF, RTOA measurement values corresponding to different TEGs or a difference between the RTOA measurement values corresponding to different TEGs; and

step 402, performing, by the LMF, error compensation according to the RTOA measurement values or the difference between the RTOA measurement values.

Optionally, the RTOA measurement values includes:

(1) RTOA measurement values obtained by that the base station receives same SRSs transmitted by the terminal respectively through different TRP Rx TEGs, and measures the SRSs; where in an embodiment, the difference between the RTOA measurement values corresponding to different TEGs includes: a difference between RTOA measurement values corresponding to different TRP Rx TEGs; and/or,

(2) RTOA measurement values obtained by that the base station receives SRSs corresponding to different UE Tx TEGs transmitted by the terminal through a same TRP Rx TEG, and measures the different SRSs respectively; where in an embodiment, the difference between the RTOA measurement values corresponding to different TEGs includes a difference between RTOA measurement values corresponding to different UE Tx TEGs.

In an embodiment, for transmitting SRS signals for positioning measurement by a terminal to a base station, the terminal may transmit SRS signals corresponding to a same UE Tx TEG, and the base station receives and measures the SRS signals based on different TRP Rx TEGs, to obtain the RTOA measurement values corresponding to different UE Tx TEGs; and/or, the terminal transmits SRS signals corresponding to different UE Tx TEGs, and the base station receives and measures the SRS signals based on a same TRP Rx TEG, to obtain the RTOA measurement values corresponding to different UE Tx TEGs.

Specifically, for the above case (1), a base station or a TRP may measure, based on different TRP Rx TEGs, same SRS signals transmitted by a same UE to obtain RTOA measurement values corresponding to different TRP Rx TEGs. The same SRS signals refers to SRSs transmitted by the terminal through a same UE Tx TEG. In this case, the RTOA measurement values may include: a first measurement value and a second measurement value, and the first measurement value is a measurement value obtained by measuring a target SRS by the base station after receiving, through a first TRP Rx TEG, the target SRS transmitted by the terminal; the second measurement value may be a measurement value obtained by measuring a target SRS by the base station after receiving, through a second TRP Rx TEG, the target SRS transmitted by the terminal.

For the above case (2), a base station or a TRP measures, based on the same TRP Rx TEG, the SRS signals corresponding to different UE Tx TEGs transmitted by the same UE, to obtain the difference between the RTOA measurement values corresponding to different UE Tx TEGs of the UE. In this case, the RTOA measurement value may include: a third measurement value and a fourth measurement value. The third measurement value may be: a measurement value obtained by measuring a first SRS by the base station after receiving, through a target TRP Rx TEG, the first SRS transmitted by the terminal. The fourth measurement value may be: a measurement value obtained by measuring a second SRS by the base station after receiving, through a target TRP Rx TEG, the second SRS transmitted by the terminal. A UE Tx TEG corresponding to the first SRS is different from a UE Tx TEG corresponding to the second SRS.

After obtaining the above RTOA measurement values or the difference between the RTOA measurement values corresponding to different TEGs transmitted by the base station, the LMF takes the difference between the RTOA measurement values corresponding to different TEGs as an error compensation value to perform error compensation on the positioning result.

As an optional embodiment, the performing error compensation according to the RTOA measurement values includes: obtaining the difference between the RTOA measurement values corresponding to different TEGs according to the RTOA measurement values; and performing error compensation according to the difference between the RTOA measurement values.

After obtaining the RTOA measurement values corresponding to different TEGs, the base station may transmit the RTOA measurement values to the LMF, and the LMF calculates a difference between the RTOA measurement values corresponding to different TEGs, and performs error compensation according to the difference. Alternatively, after obtaining the RTOA measurement values corresponding to different TEGs, the base station calculates a difference between the RTOA measurement values corresponding to different TEGs, and transmits the difference to the LMF, and the LMF performs error compensation according to the difference.

Optionally, the LMF performing error compensation according to the RTOA measurement values or the difference between the RTOA measurement values includes: taking a positioning measurement result plus the error compensation value as a compensated positioning measurement result.

Optionally, the LMF performs error compensation according to the difference between the RTOA measurement values, that is, adding the error compensation value on the basis of the positioning measurement result, as follows:

(1) by taking a double-difference positioning process as an example, the error compensation value is compensated on the basis of the double-difference value, and the error compensation value is the difference between the RTOA measurement values corresponding to different TEGs obtained by the LMF, namely: the double-difference value plus the error compensation value (the RTOA difference);

(2) by taking a single-difference positioning process as an example, the error compensation value is compensated on the basis of a reconstructed single-difference value, that is: the reconstructed single-difference value plus the error compensation value (the RTOA difference).

Optionally, before performing error compensation according to the RTOA measurement value or the difference between the RTOA measurement values corresponding to different TEGs, the LMF needs to determine whether a measurement time of the RTOA measurement values satisfies an effective time condition. In the case that the effective time condition is satisfied, the operation of step 402 may be performed.

Specifically, the performing error compensation according to the difference between the RTOA measurement values includes: determining whether a measurement time of the RTOA measurement values satisfies an effective time condition based on TEG effective time information; performing error compensation according to the difference between the RTOA measurement values in the case that the effective time condition is satisfied.

The TEG effective time information may be predefined by a protocol, or may be reported by a terminal or a base station. Optionally, the TEG effective time information includes at least one of the following:

1) a TEG effective time period. The TEG effective time period may be set. A measurement time period of the RTOA measurement values corresponding to different TEGs, a time period when the terminal transmits SRS signals, and an interval of the to-be-compensated measurement time periods are located in the TEG effective time period, that is: T2 - T1 < T_TH, and it means that the measurement time of the RTOA measurement values satisfies the effective time condition, that is, the division of TEG is valid, where T1 is a median value of a to-be-compensated measurement time period, and T2 is a median value of a measurement time period for obtaining a difference for TEGs.

Optionally, the TEG effective time information includes:
2) a starting time and an ending time of a TEG effective time window. The starting time and the ending time of the TEG effective window may be defined, and a measurement time of the RTOA measurement value or a time when the terminal transmits a SRS signal is located in the effective time window, it means that the measurement time of the RTOA measurement value satisfies the effective time condition, that is, the division of the TEG is valid.

Optionally, the TEG effective time information includes:
3) indication information for TEG re-division, the indication information may be periodically or aperiodically indicated; the indication information may indicate whether a TEG is re-divided, if a TEG is re-divided, it means that the division of the TEG corresponding to the RTOA measurement value is invalid, then a current measurement time of a RTOA measurement value does not satisfy the effective time condition; if the TEG is not re-divided, it means that the division of the TEG corresponding to the RTOA measurement value is still valid, and the current measurement time of the RTOA measurement value satisfies the effective time condition.

Optionally, the TEG effective time information includes:
4) indication information for a change situation of a TEG ID. The indication information may be periodically or non-periodically indicated; the indication information may indicate whether the TEG ID changes, and if the TEG ID changes, it means that the division of a TEG corresponding to a RTOA measurement value is invalid, then the current measurement time of the RTOA measurement value does not meet the effective time condition; if the TEG ID does not change, it means that the division of the TEG corresponding to the RTOA measurement value is still valid, and the current measurement time of the RTOA measurement value meets the effective time condition.

Optionally, the TEG effective time information includes:
5) a validity period of a TEG ID. The amount of change of the TEG may be indicated periodically or aperiodically; the validity period of the TEG ID may be set. If a TEG ID corresponding to a RTOA measurement value is within the validity period, it indicates a measurement time of the RTOA measurement value meets the effective time condition; if the TEG ID corresponding to the RTOA measurement value is invalid, it means that the division of the TEG is invalid, and the measurement time of the RTOA measurement value does not meet the effective time condition.

Optionally, the TEG effective time information includes:
6) a mean value of a change rate of a timing error (TE). The mean value of the change rate of the TE may be periodically or non-periodically indicated. For example: an estimated mean value of the change rate of the TE with a certain granularity, such as: Rate = (TE(t2)- TE(t1)) / (t2 - t1). According to the change rate, it is determined whether the change of the TE affects the division of a TEG to which the TE belongs. For example, if the change of the TE causes a large difference in a transmission timing error of a UE, or a large difference in a reception timing error of a TRP, the changed TE cannot be divided into a same TEG, and it means that the division of the TE is invalid, that is, the division of the TEG being invalid.

Optionally, the TEG effective time information includes:

7) a variance of uncertainty of a TE. The variance of the uncertainty of the TE may be indicated periodically or aperiodically. The variance of the uncertainty is, for example, the variance of Rate. Judging the change of TE according to the variance of the uncertainty of TE, so as to determine whether the division of the TEG to which it belongs is valid.

Optionally, the TEG effective time information includes:

8) an amount of change in a TEG. The amount of change of the TEG may be indicated periodically or aperiodically. Whether a TEG is changed is determined according to the amount of change of the TEG. If there is a change, the current division of the TEG is invalid, and a measurement time of a TOA measurement value does not meet the effective time condition. Alternatively, an error caused by the time-varying feature may be compensated according to the amount of change, and at this time, it may be considered that the division of the TEG after compensation is valid.

Optionally, the TEG effective time information includes:

9) indication information for a change situation of a TEG association relationship. The indication information may be indicated periodically or aperiodically. Whether the division of a TEG is valid may be determined according to whether the TEG association relationship changes. In the case that the TEG association relationship does not change, the division of the TEG is valid, and if the TEG association relationship changes, the division of the TEG is invalid.

In the embodiment, in a case that the measurement time of the RTOA measurement values received by the LMF satisfies the effective time condition, whether to perform error compensation is determined according to the effective time condition. When error compensation can be performed, a corresponding error in the positioning process is compensated, and position calculation is performed, so as to obtain a positioning result with the higher precision.

Optionally, the RTOA measurement value transmitted by the base station and received by the LMF may be: an average value of RTOA measurement values corresponding to K measurement times; or the difference between the RTOA measurement values is an average value of difference values of RTOA measurement values corresponding to K measurement times, where K is greater than or equal to 2, and the K measurement times satisfy the effective time condition.

In an embodiment, in order to obtain a more stable difference of RTOA measurement values corresponding to TEGs, the base station may take the average of multiple measurements corresponding to multiple grouping times that meet the effective time condition, for example: taking the average value of the RTOA measurement values of different TEGs at the K times that meet the effective time condition, or taking the average value of the differences of the RTOA measurement values at the K times. Optionally, the RTOA measurement values corresponding to different TEGs may further be smoothed to obtain the higher measurement accuracy.

In the embodiment of the present application, a LMF receives RTOA measurement values corresponding to different TEGs transmitted by a base station, or differences between the RTOA measurement values corresponding to different TEGs, and uses the differences between different RTOA measurement values as error compensation values to compensate positioning errors caused by different TEGs for transmission and reception, so as to obtain a more accurate positioning result. In view of the time-varying feature of the TEG, the embodiment proposes the concept of TEG effective time, so that in the positioning process, whether to use RTOA measurement values at different times to perform corresponding processing may be determined according to the TEG effective time, which improves the TEG elimination solution.

It should be noted that, in the above embodiments of the error measurement method applied to the base station, embodiments related to the LMF are all applicable to the embodiment of the error compensation method applied to the LMF, and the same content will not be repeated here.

The methods of the present disclosure are illustrated in the above embodiments. The following embodiments will further explain apparatuses corresponding to the methods in conjunction with the accompanying drawings.

Specifically, as shown in FIG. 5, an embodiment of the present disclosure provides an error measurement apparatus 500, which is applied to a base station, and includes:

a first obtaining unit 510, configured to measure sounding reference signals (SRSs) transmitted by a terminal to obtain relative time of arrival (RTOA) measurement values corresponding to different timing error groups (TEGs); and

a first transmitting unit 520, configured to transmit the RTOA measurement values or a difference between the RTOA measurement values corresponding to different TEGs to a location management function (LMF).

Optionally, the first obtaining unit includes:

a first obtaining subunit, configured to receive, through different transmission-reception point reception timing error groups (TRP Rx TEGs), same SRSs transmitted by the terminal, and measuring the SRSs to obtain RTOA measurement values respectively corresponding to different TRP Rx TEGs; and/or,

a second obtaining subunit, configured to receive, through a same TRP Rx TEG, SRSs corresponding to different user equipment transmission timing error groups (UE Tx TEGs) transmitted by the terminal, and measuring the different SRSs respectively to obtain RTOA measurement values respectively corresponding to different UE Tx TEGs.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the apparatus further includes: a first determining unit, configured to determine whether a measurement time of the RTOA measurement values satisfies an effective time condition based on TEG effective time information. The first transmitting unit is specifically configured to: transmit the RTOA measurement values or the difference between the RTOA measurement values corresponding to different TEGs to the LMF, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the apparatus further includes: a third obtaining unit, configured to obtain an average value of RTOA measurement values corresponding to K measurement times, or obtaining an average value of difference values of RTOA measurement values corresponding to K measurement times, where K is greater than or equal to 2, and the K measurement times satisfy the effective time condition.

In an embodiment of the present application, a base station measures SRSs transmitted by a terminal, obtains RTOA measurement values corresponding to different TEGs, and transmits the RTOA measurement values or a difference between the RTOA measurement values corresponding to different TEGs to a LMF, so that the LMF uses the difference between different RTOA measurement values as an error compensation value to compensate positioning errors caused by different TEGs for transmission and reception, so as to obtain a positioning result with the higher accuracy.

It should be noted that the above-mentioned apparatus provided in the embodiment of the present disclosure can achieve all the method steps of the embodiments about the error measurement method, and can achieve the same technical effects. The description and beneficial effects of this embedment that are the same as the method embodiments will not be described here in detail.

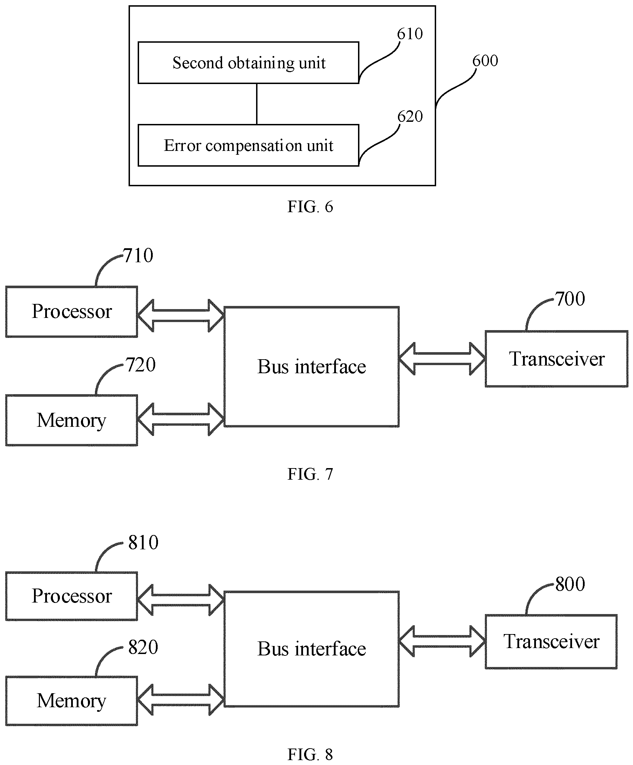

Specifically, as shown in FIG. 6, an embodiment of the present disclosure provides an error compensation apparatus 600, which is applied to a LMF. The apparatus includes:

a second obtaining unit 610, configured to obtain RTOA measurement values corresponding to different TEGs or a difference between the RTOA measurement values corresponding to different TEGs; and
an error compensation unit 620, configured to perform error compensation according to the RTOA measurement values or the difference between the RTOA measurement values.

Optionally, the RTOA measurement values include:

RTOA measurement values obtained by that the base station receives, through different TRP Rx TEGs, same SRSs transmitted by the terminal, and measures the SRSs; and/or,
RTOA measurement values obtained by that the base station receives, through a same TRP Rx TEG, SRSs corresponding to different UE Tx TEGs transmitted by the terminal, and measures the different SRSs respectively.

Optionally, the error compensation unit includes:

a third obtaining subunit, configured to obtain a difference between the RTOA measurement values corresponding to different TEGs according to the RTOA measurement values; and
a first compensation subunit is configured to perform error compensation based on the difference between the RTOA measurement values.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the error compensation unit includes:

a determining subunit, configured to determine whether a measurement time of the RTOA measurement values satisfies an effective time condition based on TEG effective time information; and
a second compensation subunit, configured to perform error compensation based on the difference between the RTOA measurement values, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the RTOA measurement value is an average value of RTOA measurement values corresponding to K measurement times; or the difference between the RTOA measurement values is an average value of difference values of RTOA measurement values corresponding to K measurement times, where K is greater than or equal to 2, and the K measurement times satisfy the effective time condition.

Optionally, the error compensation unit 620 is configured to take a sum of a positioning measurement result and an error compensation value as a compensated positioning measurement result.

In the embodiment of the present application, a LMF receives RTOA measurement values corresponding to different TEGs transmitted by a base station, or a difference between the RTOA measurement values corresponding to different TEGs, and uses the difference as an error compensation value to compensate a positioning error caused by different transmitting and receiving TEGs, so as to obtain a positioning result with the higher precision.

It should be noted that the above-mentioned apparatus provided in the embodiment of the present disclosure can achieve all the method steps of the embodiments about the error compensation method, and can achieve the same technical effects. The description and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor (processor) to execute all or part of the steps of the methods described in the various embodiments of the present disclosure. The aforementioned storage media include: a universal serial bus (USB) flash drive, removable hard disk, read-only memory (Read-Only Memory, ROM), random access memory (Random Access Memory, RAM), magnetic disk, optical disc or other media that can store program codes.

As shown in FIG. 7, an embodiment of the present disclosure further provides an error measurement apparatus. The apparatus includes: a memory 720, a transceiver 700 and a processor 710. The memory 720 is configured to store a computer program; the processor 710 is configured to read the computer program from the memory, so as to perform the following steps: measuring sounding reference signals (SRSs) transmitted by a terminal to obtain relative time of arrival (RTOA) measurement values corresponding to different timing error groups (TEGs). The transceiver is configured to transmit the RTOA measurement values or a difference between the RTOA measurement values corresponding to different TEGs to a location management function (LMF).

Optionally, the processor is configured to read the computer program in the memory to perform the following operations:

receiving, through different transmission-reception point reception timing error groups (TRP Rx TEGs), same SRSs transmitted by the terminal, and measuring the SRSs to obtain RTOA measurement values respectively corresponding to different TRP Rx TEGs; and/or,

receiving, through a same TRP Rx TEG, SRSs corresponding to different user equipment transmission timing error groups (UE Tx TEGs) transmitted by the terminal, and measuring the different SRSs respectively to obtain RTOA measurement values respectively corresponding to different UE Tx TEGs.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the processor is configured to read the computer program in the memory to perform the following operations: determining whether a measurement time of the RTOA measurement values satisfies an effective time condition based on TEG effective time information. The transceiver is configured to: transmit the RTOA measurement values or the difference between the RTOA measurement values corresponding to different TEGs to the LMF, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the processor is configured to read the computer program in the memory to perform the following operations: obtaining an average value of RTOA measurement values corresponding to K measurement times, or obtaining an average value of difference values of RTOA measurement values corresponding to K measurement times, where K is greater than or equal to 2, and the K measurement times satisfy the effective time condition.

In the embodiment of the present application, a base station measures SRSs transmitted by a terminal to obtain RTOA measurement values corresponding to different TEGs, and transmits the RTOA measurement values or a difference between the RTOA measurement values corresponding to different TEGs to a LMF. In this way, the LMF uses the difference between the different RTOA measurement values as an error compensation value to compensate for a positioning error caused by different reception and transmission TEGs, thereby obtaining positioning results with the higher accuracy.

In FIG. 7, the bus architecture may include any number of interconnected buses and bridges. Specifically, various circuits of one or more processors represented by the processor 710 and a memory represented by the memory 720 are linked together. The bus architecture may also link various other circuits such as peripheral devices, voltage regulators, power management circuits, etc., which are well-known in the art, and therefore, no further descriptions are provided herein. The bus interface provides an interface. The transceiver 700 may be a plurality of elements, that is, include a transmitter and a receiver, and provide a unit for communicating with various other devices on a transmission medium. The processor 710 is responsible for managing the bus architecture and general processing, and the memory 720 may store data used by the processor 710 when performing operations.

The processor 710 may be a central processing unit (CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor may also adopt a multi-core architecture.

It should be noted that the above-mentioned error measurement apparatus provided in the embodiment of the present disclosure can achieve all the method steps in the above embodiments about the error measurement method, and can achieve the same technical effects. The description and beneficial effects of this embedment that are the same as the method embodiments will not be described here in detail.

As shown in FIG. 8, an embodiment of the present disclosure further provides an error compensation apparatus. The apparatus includes a memory 820, a transceiver 800 and a processor 810. The memory 820 is configured to store a computer program; the transceiver 800 is configured to transmit and receive data under the control of the processor 810; the processor 810 is configured to read the computer program from the memory to perform the following operations:

obtaining RTOA measurement values corresponding to different TEGs or a difference between the RTOA measurement values corresponding to different TEGs; and

performing error compensation according to the RTOA measurement values or the difference between the RTOA measurement values.

Optionally, the RTOA measurement values include:

RTOA measurement values obtained by that the base station receives, through different TRP Rx TEGs, same SRSs transmitted by the terminal, and measures the SRSs; and/or,
RTOA measurement values obtained by that the base station receives, through a same TRP Rx TEG, SRSs corresponding to different UE Tx TEGs transmitted by the terminal, and measures the different SRSs respectively.

Optionally, the processor is configured to read the computer program in the memory to perform the following operations:

obtaining a difference between the RTOA measurement values corresponding to different TEGs according to the RTOA measurement values; and
performing error compensation based on the difference between the RTOA measurement values.

Optionally, the difference between the RTOA measurement values corresponding to different TEGs includes:

a difference between RTOA measurement values corresponding to different TRP Rx TEGs; and/or,
a difference between RTOA measurement values corresponding to different UE Tx TEGs.

Optionally, the processor is configured to read the computer program in the memory to perform the following operations:

determining whether a measurement time of the RTOA measurement values satisfies an effective time condition based on TEG effective time information; and
performing error compensation based on the difference between the RTOA measurement values, in a case where the effective time condition is satisfied.

Optionally, the TEG effective time information includes at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

Optionally, the RTOA measurement value is an average value of RTOA measurement values corresponding to K measurement times; or the difference between the RTOA measurement values is an average value of difference values of RTOA measurement values corresponding to K measurement times, where K is greater than or equal to 2, and the K measurement times satisfy the effective time condition.

Optionally, the processor is configured to read the computer program in the memory to perform the following operations: using a sum of a positioning measurement result and an error compensation value as a compensated positioning measurement result.

In the embodiment of the present application, a LMF receives RTOA measurement values corresponding to different TEGs transmitted by a base station, or a difference between the RTOA measurement values corresponding to different TEGs, and uses the difference as an error compensation value to compensate positioning errors caused by different TEGs for transmitting and receiving, so as to obtain a positioning result with the higher precision.

In FIG. 8, the bus architecture may include any number of interconnected buses and bridges. Specifically, various circuits of one or more processors represented by the processor 810 and a memory represented by the memory 820 are linked together. The bus architecture may also link various other circuits such as peripheral devices, voltage regulators, power management circuits, etc., which are well-known in the art, and therefore, no further descriptions are provided herein. The bus interface provides an interface. The transceiver 800 may be a plurality of elements, that is, include a transmitter and a receiver, and provide a unit for communicating with various other devices on a transmission medium. The processor 810 is responsible for managing the bus architecture and general processing, and the memory 820 may store data used by the processor 810 when performing operations.

The processor 810 may be a central processing unit (CPU), application specific integrated circuit (Application Specific Integrated Circuit, ASIC), field-programmable gate array (Field-Programmable Gate Array, FPGA), or complex programmable logic device (Complex Programmable Logic Device, CPLD), and the processor may also adopt a multi-core architecture.

It should be noted that the above-mentioned error measurement apparatus provided in the embodiment of the present disclosure can achieve all the method steps in the above embodiments about the error measurement method, and can achieve the same technical effects. The description and beneficial effects of this embedment that are the same as the method embodiments will not be described here in detail.

In addition, a specific embodiment of the present disclosure further provides a processor readable storage medium, where the processor readable storage medium stores a computer program. The computer program, when being executed, causes a processor to implement steps in the above error measurement method or error compensation method, and can achieve the same technical effects, which will not be described here to avoid repetition. The readable storage medium may be any available medium or data storage device that can be accessed by the processor, including but not limited to magnetic storage (such as floppy disk, hard disk, magnetic tape, magnetooptical disk (MO)), optical storage (such as CD, DVD, BD and HVD), and semiconductor memory (such as ROM, EPROM, EEPROM, non-volatile memory (NAND FLASH), solid-state drive (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer available storage media (including but not limited to disk storage and optical storage) including a computer available program code.

The present disclosure is described with reference to the flow chart and/or the block diagram of the method, device (system), and computer program product according to the embodiments of the present disclosure. It should be appreciated that each of processes and/or boxes in a flow chart and/or block diagram, and a combination of the processes and/or boxes in the flow chart and/or block diagram may be implemented by computer executable instructions. These computer executable instructions may be provided to a processor of a general-purpose computer, a specialized computer, an embedded processing device, or other programmable data processing devices to generate a machine that generates instructions executed by the processor of computer or other programmable data processing devices to implement functions specified in one or more processes and/or blocks in a flow chart.

These processor executable instructions may also be stored in processor-readable memory that may guide computers or other programmable data processing devices to work in a specific way, causing the instructions stored in the processor readable memory to generate a manufacturing product including instruction devices that implement the functions specified in one or more processes and/or blocks of a flow chart.

These processor executable instructions may also be loaded onto a computer or other programmable data processing device, enabling a series of operational steps to be performed on the computer or other programmable device to generate computer-implemented processing. Thus, instructions executed on computers or other programmable devices provide steps for implementing functions specified in one or more processes and/or boxes of a flow chart.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above apparatus, or, may be stored in the memory of the above apparatus in the form of program code, and a certain processing element of the above apparatus may call and execute the functions of the determination. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the embodiment of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure shall also intend to include these modifications and variations.

**Claims**

1. An error measurement method, comprising:

    measuring, by a base station, sounding reference signals (SRSs) transmitted by a terminal to obtain relative time of arrival (RTOA) measurement values corresponding to different timing error groups (TEGs); and
    transmitting, by the base station, the RTOA measurement values or a difference between the RTOA measurement values corresponding to different TEGs to a location management function (LMF).

2. The method according to claim 1, wherein the measuring the SRSs transmitted by the terminal to obtain the RTOA measurement values corresponding to different TEGs comprises:

    receiving, through different transmission-reception point reception timing error groups (TRP Rx TEGs), same SRSs transmitted by the terminal, and measuring the SRSs to obtain RTOA measurement values corresponding to different TRP Rx TEGs respectively; and/or,
    receiving, through a same TRP Rx TEG, SRSs corresponding to different user equipment transmission timing error groups (UE Tx TEGs) transmitted by the terminal, and measuring the different SRSs respectively to obtain RTOA measurement values respectively corresponding to different UE Tx TEGs.

3. The method according to claim 2, wherein the difference between the RTOA measurement values corresponding to the different TEGs comprises:

    a difference between RTOA measurement values corresponding to different TRP Rx TEGs; and/or,
    a difference between RTOA measurement values corresponding to different UE Tx TEGs.

4. The method according to claim 1, further comprising:

    determining whether a measurement time of the RTOA measurement values satisfies an effective time condition based on TEG effective time information;

wherein the transmitting the RTOA measurement values or the difference between the RTOA measurement values corresponding to different TEGs to the location management function (LMF) comprises:

transmitting the RTOA measurement values or the difference between the RTOA measurement values corresponding to different TEGs to the LMF, in a case where the effective time condition is satisfied.

5. The method according to claim 4, wherein the TEG effective time information comprises at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

6. The method according to claim 4, wherein after obtaining the relative time of arrival (RTOA) measurement values corresponding to different TEGs, the method further comprises:
obtaining an average value of RTOA measurement values corresponding to K measurement times, or obtaining an average value of difference values of RTOA measurement values corresponding to K measurement times, wherein K is greater than or equal to 2, and the K measurement times satisfy the effective time condition.

7. An error compensation method, comprising:

obtaining, by a LMF, RTOA measurement values corresponding to different TEGs or a difference between the RTOA measurement values corresponding to different TEGs; and
performing, by the LMF, error compensation according to the RTOA measurement values or the difference between the RTOA measurement values.

8. The method according to claim 7, wherein the RTOA measurement values comprise:

RTOA measurement values obtained by that a base station receives, through different TRP Rx TEGs, same SRSs transmitted by a terminal, and measures the SRSs; and/or,
RTOA measurement values obtained by that a base station receives, through a same TRP Rx TEG, SRSs corresponding to different UE Tx TEGs transmitted by a terminal, and measures the different SRSs respectively.

9. The method according to claim 7, wherein the performing error compensation according to the RTOA measurement values comprises:

obtaining a difference between the RTOA measurement values corresponding to different TEGs according to the RTOA measurement values; and
performing error compensation based on the difference between the RTOA measurement values.

10. The method according to claim 8, wherein the difference between the RTOA measurement values corresponding to different TEGs comprises:

a difference between RTOA measurement values corresponding to different TRP Rx TEGs; and/or,
a difference between RTOA measurement values corresponding to different UE Tx TEGs.

11. The method according to claim 7 or 9, wherein the performing error compensation based on the difference between the RTOA measurement values comprises:

determining whether a measurement time of the RTOA measurement values satisfies an effective time condition based on TEG effective time information; and
performing error compensation based on the difference between the RTOA measurement values, in a case where the effective time condition is satisfied.

12. The method according to claim 11, wherein the TEG effective time information comprises at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

13. The method according to claim 11, wherein the RTOA measurement value is an average value of RTOA measurement values corresponding to K measurement times; or

the difference between the RTOA measurement values is an average value of difference values of RTOA measurement values corresponding to K measurement times,
wherein K is greater than or equal to 2, and the K measurement times satisfy the effective time condition.

14. The method according to claim 7, wherein the performing, by the LMF, error compensation according to the RTOA measurement values or the difference between the RTOA measurement values comprises:
taking a sum of a positioning measurement result and an error compensation value as a compensated positioning measurement result.

15. An error measurement apparatus, comprising: a memory, a transceiver and a processor,
wherein the memory is configured to store a computer program; the transceiver is configured to transmit and receive data under control of the processor; and the processor is configured to read the computer program from the memory to perform the following operations:

measuring sounding reference signals (SRSs) transmitted by a terminal to obtain relative time of arrival (RTOA) measurement values corresponding to different timing error groups (TEGs); and
wherein the transceiver is configured to transmit the RTOA measurement values or a difference between the RTOA measurement values corresponding to different TEGs to a location management function (LMF).

16. The apparatus according to claim 15, wherein the processor is configured to read computer program from the memory to perform the following operations:

receiving, through different transmission-reception point reception timing error groups (TRP Rx TEGs), same SRSs transmitted by the terminal, and measuring the SRSs to obtain RTOA measurement values respectively corresponding to different TRP Rx TEGs; and/or,
receiving, through a same TRP Rx TEG, SRSs corresponding to different user equipment transmission timing error groups (UE Tx TEGs) transmitted by the terminal, and measuring the different SRSs respectively to obtain RTOA measurement values respectively corresponding to different UE Tx TEGs.

17. The apparatus according to claim 16, wherein the difference between the RTOA measurement values corresponding to different TEGs comprises:

a difference between RTOA measurement values corresponding to different TRP Rx TEGs; and/or,
a difference between RTOA measurement values corresponding to different UE Tx TEGs.

18. The apparatus according to claim 15, wherein the processor is configured to read computer program from the memory to perform the following operations:

determining whether a measurement time of the RTOA measurement values satisfies an effective time condition based on TEG effective time information; and
wherein the transceiver is configured to transmit the RTOA measurement values or the difference between the RTOA measurement values corresponding to different TEGs to the LMF, in a case where the effective time condition is satisfied.

19. The apparatus according to claim 15, wherein the TEG effective time information comprises at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

20. The apparatus according to claim 18, wherein the processor is configured to read computer program from the memory to perform the following operations:
obtaining an average value of RTOA measurement values corresponding to K measurement times, or obtaining an average value of difference values of RTOA measurement values corresponding to K measurement times, wherein K is greater than or equal to 2, and the K measurement times satisfy the effective time condition.

21. An error compensation apparatus, comprising: a memory, a transceiver, a processor,
wherein the memory is configured to store a computer program; the transceiver is configured to transmit and receive data under control of the processor; and the processor is configured to read the computer program from the memory to perform the following operations:

obtaining RTOA measurement values corresponding to different TEGs or a difference between the RTOA measurement values corresponding to different TEGs; and
performing error compensation according to the RTOA measurement values or the difference between the RTOA measurement values.

22. The apparatus according to claim 21, wherein the RTOA measurement values comprise:

RTOA measurement values obtained by that a base station receives, through different TRP Rx TEGs, same SRSs transmitted by a terminal, and measures the SRSs; and/or,
RTOA measurement values obtained by that a base station receives, through a same TRP Rx TEG, SRSs corresponding to different UE Tx TEGs transmitted by a terminal, and measures the different SRSs respectively.

23. The apparatus according to claim 21, wherein the processor is configured to read the computer program from the memory to perform the following operations:

obtaining a difference between the RTOA measurement values corresponding to different TEGs according to the RTOA measurement values; and
performing error compensation based on the difference between the RTOA measurement values.

24. The apparatus according to claim 22, wherein the difference between the RTOA measurement values corresponding to different TEGs comprises:

a difference between RTOA measurement values corresponding to different TRP Rx TEGs; and/or,
a difference between RTOA measurement values corresponding to different UE Tx TEGs.

25. The apparatus according to claim 21 or 23, wherein the processor is configured to read the computer program from the memory to perform the following operations:

determining whether a measurement time of the RTOA measurement values satisfies an effective time condition based on TEG effective time information; and
performing error compensation based on the difference between the RTOA measurement values, in a case where the effective time condition is satisfied.

26. The apparatus according to claim 25, wherein the TEG effective time information comprises at least one of the following:

a TEG effective time period; or
a starting time and an ending time of a TEG effective time window; or
indication information for TEG re-division; or
indication information for a change situation of a TEG ID; or
a validity period of a TEG ID; or
a mean value of a change rate of a timing error (TE); or
a variance of uncertainty of a TE; or
an amount of change in a TEG; or
indication information for a change situation of a TEG association relationship.

27. The apparatus according to claim 25, wherein the RTOA measurement value is an average value of RTOA measurement values corresponding to K measurement times; or

the difference between the RTOA measurement values is an average value of difference values of RTOA measurement values corresponding to K measurement times,
wherein K is greater than or equal to 2, and the K measurement times satisfy the effective time condition.

28. The apparatus according to claim 21, wherein the processor is configured to read the computer program from the memory to perform the following operations:
taking a sum of a positioning measurement result and an error compensation value as a compensated positioning measurement result.

29. An error measurement apparatus, comprising:

a first obtaining unit, configured to measure sounding reference signals (SRSs) transmitted by a terminal to obtain relative time of arrival (RTOA) measurement values corresponding to different timing error groups (TEGs); and
a first transmitting unit, configured to transmit the RTOA measurement values or a difference between the RTOA measurement values corresponding to different TEGs to a location management function (LMF).

30. An error compensation apparatus, comprising:

a second obtaining unit, configured to obtain RTOA measurement values corresponding to different TEGs or a difference between the RTOA measurement values corresponding to different TEGs; and
an error compensation unit, configured to perform error compensation according to the RTOA measurement values or the difference between the RTOA measurement values.

31. A processor readable storage medium, storing a computer program, wherein the computer program is configured to be executed to cause a computer to perform steps of the error measurement method according to any one of claims 1 to 6, or steps of the error compensation method according to any one of claims 7 to 14.

FIG. 1

FIG. 2

Measuring, by the base station, SRSs transmitted by a terminal, and obtaining RTOA measurement values corresponding to different TEGs — 301

Transmitting, by the base station, the RTOA measurement values or a difference between the RTOA measurement values corresponding to different TEGs to a LMF — 302

FIG. 3

Obtaining, by the LMF, RTOA measurement values corresponding to different TEGs or a difference between the RTOA measurement values corresponding to different TEGs — 401

Performing, by the LMF, error compensation according to the RTOA measurement values or the difference between the RTOA measurement values — 402

FIG. 4

First obtaining unit — 510

First transmitting unit — 520

500

FIG. 5

Second obtaining unit 610

600

Error compensation unit 620

FIG. 6

710

Processor

720

Memory

Bus interface

700

Transceiver

FIG. 7

810

Processor

820

Memory

Bus interface

800

Transceiver

FIG. 8

## INTERNATIONAL SEARCH REPORT

| International application No. |
| --- |
| **PCT/CN2022/108929** |

**A. CLASSIFICATION OF SUBJECT MATTER**

H04W 64/00(2009.01)i; H04W 24/08(2009.01)i

According to International Patent Classification (IPC) or to both national classification and IPC

**B. FIELDS SEARCHED**

Minimum documentation searched (classification system followed by classification symbols)

H04W64/-; H04W24/-

Documentation searched other than minimum documentation to the extent that such documents are included in the fields searched

Electronic data base consulted during the international search (name of data base and, where practicable, search terms used)

CNTXT; CNABS; CNKI: SRS, 探测参考信号, 发送接收点, 基站, +NB, TRP, 不同, 多个, 时间误差组, TEG?, TRP Rx TEG, UE Tx TEG, RTOA, 相对到达时间, 差值, 定位管理功能, LMF, 补偿; VEN; USTXT; EPTXT; WOTXT; 3GPP: SRS, +NB, TRP, different, multi+, TEG?, TRP Rx TEG, UE Tx TEG, RTOA, difference, LMF, compensat+

**C. DOCUMENTS CONSIDERED TO BE RELEVANT**

| Category* | Citation of document, with indication, where appropriate, of the relevant passages | Relevant to claim No. |
| --- | --- | --- |
| PX | US 2022053436 A1 (SOSNIN SERGEY et al.) 17 February 2022 (2022-02-17) description, paragraphs [0196]-[0318] | 1-31 |
| X | VIVO. ""Discussion on Methods for RxTx Timing Delay Mitigating"" *R1-2104359 3GPP_TSG_RAN_WG1_#105-e_e-Meeting*, 11 May 2021 (2021-05-11), pages 5-8, section 3.2 | 1-31 |
| X | VIVO. ""Discussion on Methods for RxTx Timing Delay Mitigating"" *R1-2102526 3GPP TSG RAN WG1 #104b-e*, 06 April 2021 (2021-04-06), pages 5-7, section 3.2 | 1-31 |
| A | CN 102869038 A (HUAWEI TECHNOLOGIES CO., LTD.) 09 January 2013 (2013-01-09) entire document | 1-31 |
| A | CN 104396321 A (HUAWEI TECHNOLOGIES CO., LTD.) 04 March 2015 (2015-03-04) entire document | 1-31 |
| A | NOKIA et al. ""Timing Errors"" *R1-2105512 3GPP TSG RAN WG1 #105-e*, 11 May 2021 (2021-05-11), entire document | 1-31 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 October 2022** | **31 October 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108929**

| Patent document cited in search report | | | Publication date (day/month/year) | Patent family member(s) | | | Publication date (day/month/year) |
|---|---|---|---|---|---|---|---|
| US | 2022053436 | A1 | 17 February 2022 | None | | | |
| CN | 102869038 | A | 09 January 2013 | US | 2014057664 | A1 | 27 February 2014 |
| | | | | CN | 102869038 | B | 21 January 2015 |
| | | | | US | 9002381 | B2 | 07 April 2015 |
| CN | 104396321 | A | 04 March 2015 | WO | 2014071563 | A1 | 15 May 2014 |
| | | | | CN | 104396321 | B | 05 April 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110901667